(19) Europäisches Patentamt
European Patent Office
Office européen des brevets

(11) **EP 4 311 239 A1**

(12) **EUROPEAN PATENT APPLICATION**
published in accordance with Art. 153(4) EPC

(43) Date of publication:
**24.01.2024 Bulletin 2024/04**

(21) Application number: **22771795.6**

(22) Date of filing: **17.03.2022**

(51) International Patent Classification (IPC):
*H04N 19/597* (2014.01)    *H04N 19/57* (2014.01)
*H04N 19/70* (2014.01)    *H04N 19/105* (2014.01)
*G06T 9/00* (2006.01)

(52) Cooperative Patent Classification (CPC):
**G06T 9/00; H04N 19/105; H04N 19/57;
H04N 19/597; H04N 19/70**

(86) International application number:
**PCT/KR2022/003773**

(87) International publication number:
**WO 2022/197129 (22.09.2022 Gazette 2022/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.03.2021 KR 20210035795**

(71) Applicant: **LG Electronics Inc.**
**Yeongdeungpo-gu**
**Seoul 07336 (KR)**

(72) Inventors:
• **LEE, Sooyeon**
**Seoul 06772 (KR)**
• **OH, Hyunmook**
**Seoul 06772 (KR)**
• **HUR, Hyejung**
**Seoul 06772 (KR)**
• **PARK, Yousun**
**Seoul 06772 (KR)**

(74) Representative: **Mooser, Sebastian Thomas**
**Wuesthoff & Wuesthoff**
**Patentanwälte PartG mbB**
**Schweigerstraße 2**
**81541 München (DE)**

(54) **POINT CLOUD DATA TRANSMISSION DEVICE, POINT CLOUD DATA TRANSMISSION METHOD, POINT CLOUD DATA RECEPTION DEVICE, AND POINT CLOUD DATA RECEPTION METHOD**

(57)    A point cloud data transmission method according to embodiments may comprise the steps of: encoding point cloud data; and transmitting a bitstream including the point cloud data. A point cloud data reception method according to embodiments may comprise the steps of: receiving a bitstream including point cloud data; and decoding the point cloud data.

FIG. 1

EP 4 311 239 A1

**Description**

**TECHNICAL FIELD**

Embodiments relate to a method and device for processing point cloud content.

**BACKGROUND**

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

**DISCLOSURE**

**TECHNICAL PROBLEM**

Embodiments provide a device and method for efficiently processing point cloud data. Embodiments provide a point cloud data processing method and device for addressing latency and encoding/decoding complexity.
The technical scope of the embodiments is not limited to the aforementioned technical objects, and may cover other technical objects that may be inferred by those skilled in the art based on the entire contents disclosed herein.

**TECHNICAL SOLUTION**

To achieve these objects and other advantages and in accordance with the purpose of the disclosure, as embodied and broadly described herein, a method for transmitting point cloud data may include encoding the point cloud data, and transmitting a bitstream containing the point cloud data. In another aspect of the present disclosure, a method for receiving point cloud data may include receiving a bitstream containing the point cloud data, and decoding the point cloud data.

**ADVANTAGEOUS EFFECTS**

Devices and methods according to embodiments may process point cloud data with high efficiency.
The devices and methods according to the embodiments may provide a high-quality point cloud service.
The devices and methods according to the embodiments may provide point cloud content for providing general-purpose services such as a VR service and a self-driving service.

**BRIEF DESCRIPTION OF THE DRAWINGS**

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts. In the drawings:

FIG. 1 shows an exemplary point cloud content providing system according to embodiments;
FIG. 2 is a block diagram illustrating a point cloud content providing operation according to embodiments;
FIG. 3 illustrates an exemplary process of capturing a point cloud video according to embodiments;
FIG. 4 illustrates an exemplary point cloud encoder according to embodiments;
FIG. 5 shows an example of voxels according to embodiments;
FIG. 6 shows an example of an octree and occupancy code according to embodiments;
FIG. 7 shows an example of a neighbor node pattern according to embodiments;
FIG. 8 illustrates an example of point configuration in each LOD according to embodiments;
FIG. 9 illustrates an example of point configuration in each LOD according to embodiments;
FIG. 10 illustrates a point cloud decoder according to embodiments;
FIG. 11 illustrates a point cloud decoder according to embodiments;

FIG. 12 illustrates a transmission device according to embodiments;

FIG. 13 illustrates a reception device according to embodiments;

FIG. 14 illustrates an exemplary structure operable in connection with point cloud data transmission/reception methods/devices according to embodiments;

FIG. 15 illustrates a motion vector classifier according to embodiments;

FIG. 16 illustrates reference and current frames according to embodiments;

FIG. 17 illustrates points included in a search window and/or prediction unit according to embodiments;

FIG. 18, FIG. 19, FIG. 20, and FIG. 21 illustrate motion vector estimation operations according to embodiments;

FIG. 22 illustrates a bitstream including point cloud data according to embodiments;

FIG. 23 illustrates a sequence parameter set and a geometry parameter set according to embodiments;

FIG. 24 illustrates information on a prediction unit (PU) tree structure according to embodiments;

FIG. 25 illustrates prediction modes according to embodiments;

FIG. 26 illustrates a point cloud data transmission method according to embodiments;

FIG. 27 illustrates a point cloud data reception method according to embodiments;

FIG. 28 illustrates the point cloud data transmission method according to the embodiments; and

FIG. 29 illustrates the point cloud data reception method according to the embodiments.

## DETAILED DESCRIPTION

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

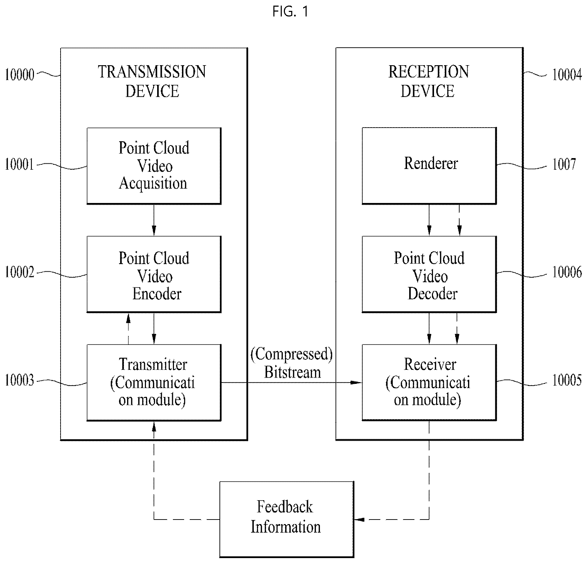

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (for example, a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (for example, a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (for example, in a reverse process of the operation of the point cloud video encoder 10002). Accordingly, the point cloud video decoder 10006 may decode the point cloud video data by performing point cloud decompression coding, which is the inverse process of the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

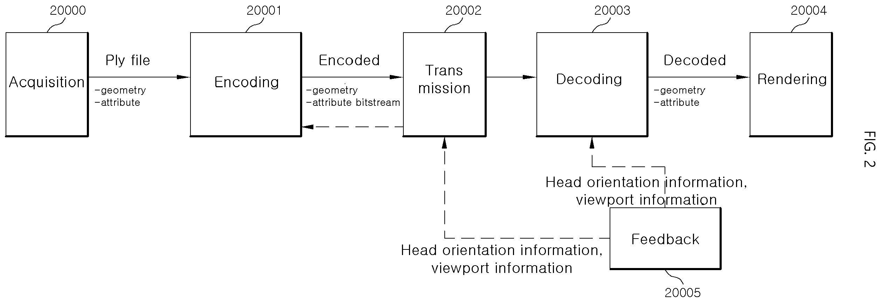

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (for example, the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (for example, values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, or the like, and the attribute may be called attributes, attribute information, attribute data, or the like. The point cloud content providing system (for example, the point cloud transmission device 10000 or the point cloud video acquirer 10001) may secure point cloud data from information (e.g., depth information, color information, etc.) related to the acquisition process of the point cloud video.

The point cloud content providing system (for example, the transmission device 10000 or the point cloud video encoder 10002) according to the embodiments may encode the point cloud data (20001). The point cloud content providing system may encode the point cloud data based on point cloud compression coding. As described above, the point cloud data may include the geometry and attributes of a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (for example, the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (for example, signaling information related to the geometry encoding and the attribute encoding). The point cloud content providing system may encapsulate a bitstream that carries the encoded point cloud data and transmit the same in the form of a file or segment.

The point cloud content providing system (for example, the reception device 10004 or the receiver 10005) according to the embodiments may receive the bitstream containing the encoded point cloud data. In addition, the point cloud content providing system (for example, the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (for example, the reception device 10004 or the point cloud video decoder 10005) may decode the point cloud video data based on the signaling information related to encoding of the point cloud video data contained in the bitstream. The point cloud content providing system (for example, the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (for example, the reception device 10004 or the point cloud video decoder 10005) may reconstruct the point cloud video based on the positions according to the reconstructed geometry and the decoded attributes.

The point cloud content providing system according to the embodiments (for example, the reception device 10004 or the renderer 10007) may render the decoded point cloud data (20004). The point cloud content providing system (for example, the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (for example, the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus detailed description thereof is omitted.

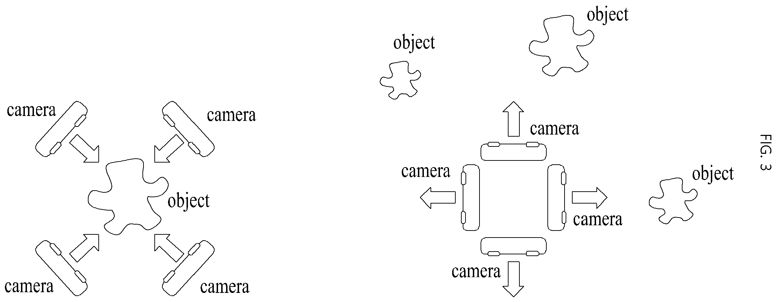

FIG. 3 illustrates an exemplary process of capturing a point cloud video according to embodiments.

FIG. 3 illustrates an exemplary point cloud video capture process of the point cloud content providing system described with reference to FIGS. 1 and 2.

Point cloud content includes a point cloud video (images and/or videos) representing an object and/or environment located in various 3D spaces (e.g., a 3D space representing a real environment, a 3D space representing a virtual environment, etc.). Accordingly, the point cloud content providing system according to the embodiments may capture a point cloud video using one or more cameras (e.g., an infrared camera capable of securing depth information, an RGB camera capable of extracting color information corresponding to the depth information, etc.), a projector (e.g., an infrared pattern projector to secure depth information), a LiDAR, or the like. The point cloud content providing system according to the embodiments may extract the shape of geometry composed of points in a 3D space from the depth information and extract the attributes of each point from the color information to secure point cloud data. An image and/or video according to the embodiments may be captured based on at least one of the inward-facing technique and the outward-facing technique.

The left part of FIG. 3 illustrates the inward-facing technique. The inward-facing technique refers to a technique of capturing images a central object with one or more cameras (or camera sensors) positioned around the central object. The inward-facing technique may be used to generate point cloud content providing a 360-degree image of a key object to the user (e.g., VR/AR content providing a 360-degree image of an object (e.g., a key object such as a character, player, object, or actor) to the user).

The right part of FIG. 3 illustrates the outward-facing technique. The outward-facing technique refers to a technique of capturing images an environment of a central object rather than the central object with one or more cameras (or camera sensors) positioned around the central object. The outward-facing technique may be used to generate point cloud content for providing a surrounding environment that appears from the user's point of view (e.g., content representing an external environment that may be provided to a user of a self-driving vehicle).

As shown in the figure, the point cloud content may be generated based on the capturing operation of one or more cameras. In this case, the coordinate system may differ among the cameras, and accordingly the point cloud content providing system may calibrate one or more cameras to set a global coordinate system before the capturing operation. In addition, the point cloud content providing system may generate point cloud content by synthesizing an arbitrary image and/or video with an image and/or video captured by the above-described capture technique. The point cloud content providing system may not perform the capturing operation described in FIG. 3 when it generates point cloud content representing a virtual space. The point cloud content providing system according to the embodiments may perform post-processing on the captured image and/or video. In other words, the point cloud content providing system may remove an unwanted area (for example, a background), recognize a space to which the captured images and/or videos are connected, and, when there is a spatial hole, perform an operation of filling the spatial hole.

The point cloud content providing system may generate one piece of point cloud content by performing coordinate transformation on points of the point cloud video secured from each camera. The point cloud content providing system may perform coordinate transformation on the points based on the coordinates of the position of each camera. Accordingly, the point cloud content providing system may generate content representing one wide range, or may generate point cloud content having a high density of points.

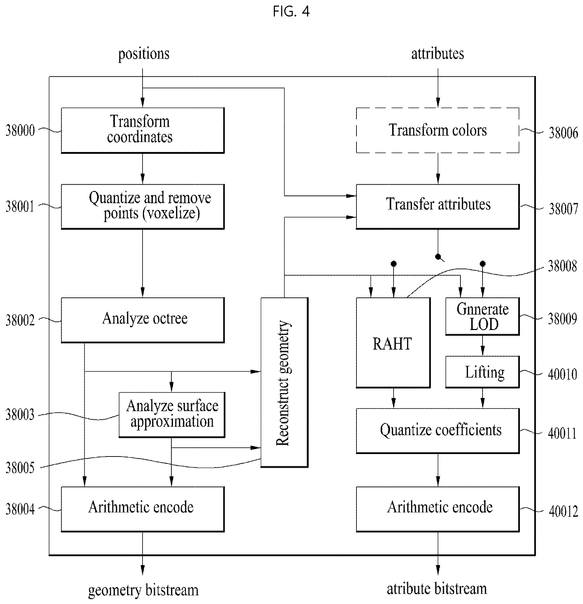

FIG. 4 illustrates an exemplary point cloud encoder according to embodiments.

FIG. 4 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud encoder according to the embodiments includes a coordinate transformer (Transform coordinates) 40000, a quantizer (Quantize and remove points (voxelize)) 40001, an octree analyzer (Analyze octree) 40002, and a surface approximation analyzer (Analyze surface approximation) 40003, an arithmetic encoder (Arithmetic encode) 40004, a geometric reconstructor (Reconstruct geometry) 40005, a color transformer (Transform colors) 40006, an attribute transformer (Transform attributes) 40007, a RAHT transformer (RAHT) 40008, an LOD generator (Generate LOD) 40009, a lifting transformer (Lifting) 40010, a coefficient quantizer (Quantize coefficients) 40011, and/or an arithmetic encoder (Arithmetic encode) 40012.

The coordinate transformer 40000, the quantizer 40001, the octree analyzer 40002, the surface approximation analyzer 40003, the arithmetic encoder 40004, and the geometry reconstructor 40005 may perform geometry encoding. The geometry encoding according to the embodiments may include octree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 40000 according to the embodiments receives positions and transforms the same into coordinates. For example, the positions may be transformed into position information in a three-dimensional space (for example, a three-dimensional space represented by an XYZ coordinate system). The position information in the three-dimensional space according to the embodiments may be referred to as geometry information.

The quantizer 40001 according to the embodiments quantizes the geometry. For example, the quantizer 40001 may quantize the points based on a minimum position value of all points (for example, a minimum value on each of the X, Y, and Z axes). The quantizer 40001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 40001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 40001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 40002 according to the embodiments performs octree geometry coding (or octree coding) to present voxels in an octree structure. The octree structure represents points matched with voxels, based on the octal tree structure.

The surface approximation analyzer 40003 according to the embodiments may analyze and approximate the octree. The octree analysis and approximation according to the embodiments is a process of analyzing a region containing a plurality of points to efficiently provide octree and voxelization.

The arithmetic encoder 40004 according to the embodiments performs entropy encoding on the octree and/or the approximated octree. For example, the encoding scheme includes arithmetic encoding. As a result of the encoding, a geometry bitstream is generated.

The color transformer 40006, the attribute transformer 40007, the RAHT transformer 40008, the LOD generator 40009, the lifting transformer 40010, the coefficient quantizer 40011, and/or the arithmetic encoder 40012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 40006 according to the embodiments performs color transform coding of transforming color values (or textures) included in the attributes. For example, the color transformer 40006 may transform the format of color information (for example, from RGB to YCbCr). The operation of the color transformer 40006 according to embodiments may be optionally applied according to the color values included in the attributes.

The geometry reconstructor 40005 according to the embodiments reconstructs (decompresses) the octree and/or the approximated octree. The geometry reconstructor 40005 reconstructs the octree/voxels based on the result of analyzing the distribution of points. The reconstructed octree/voxels may be referred to as reconstructed geometry (restored geometry).

The attribute transformer 40007 according to the embodiments performs attribute transformation to transform the attributes based on the reconstructed geometry and/or the positions on which geometry encoding is not performed. As described above, since the attributes are dependent on the geometry, the attribute transformer 40007 may transform the attributes based on the reconstructed geometry information. For example, based on the position value of a point included in a voxel, the attribute transformer 40007 may transform the attribute of the point at the position. As described above, when the position of the center of a voxel is set based on the positions of one or more points included in the voxel, the attribute transformer 40007 transforms the attributes of the one or more points. When the trisoup geometry encoding is performed, the attribute transformer 40007 may transform the attributes based on the trisoup geometry encoding.

The attribute transformer 40007 may perform the attribute transformation by calculating the average of attributes or attribute values of neighboring points (e.g., color or reflectance of each point) within a specific position/radius from the position (or position value) of the center of each voxel. The attribute transformer 40007 may apply a weight according to the distance from the center to each point in calculating the average. Accordingly, each voxel has a position and a calculated attribute (or attribute value).

The attribute transformer 40007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 40007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 40009.

The RAHT transformer 40008 according to the embodiments performs RAHT coding for predicting attribute information based on the reconstructed geometry information. For example, the RAHT transformer 40008 may predict attribute information of a node at a higher level in the octree based on the attribute information associated with a node at a lower level in the octree.

The LOD generator 40009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 40010 according to the embodiments performs lifting transform coding of transforming the attributes a point cloud based on weights. As described above, lifting transform coding may be optionally applied.

The coefficient quantizer 40011 according to the embodiments quantizes the attribute-coded attributes based on coefficients.

The arithmetic encoder 40012 according to the embodiments encodes the quantized attributes based on arithmetic coding.

Although not shown in the figure, the elements of the point cloud encoder of FIG. 4 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 4 described above. Additionally, the one or more processors may operate or execute a set of software programs and/or instructions for performing the operations and/or functions of the elements of the point cloud encoder of FIG. 4. The one or more memories according to the embodiments may include a high speed random access memory, or include a non-volatile memory (e.g., one or more magnetic disk storage devices, flash memory devices, or other non-volatile solid-state memory devices).

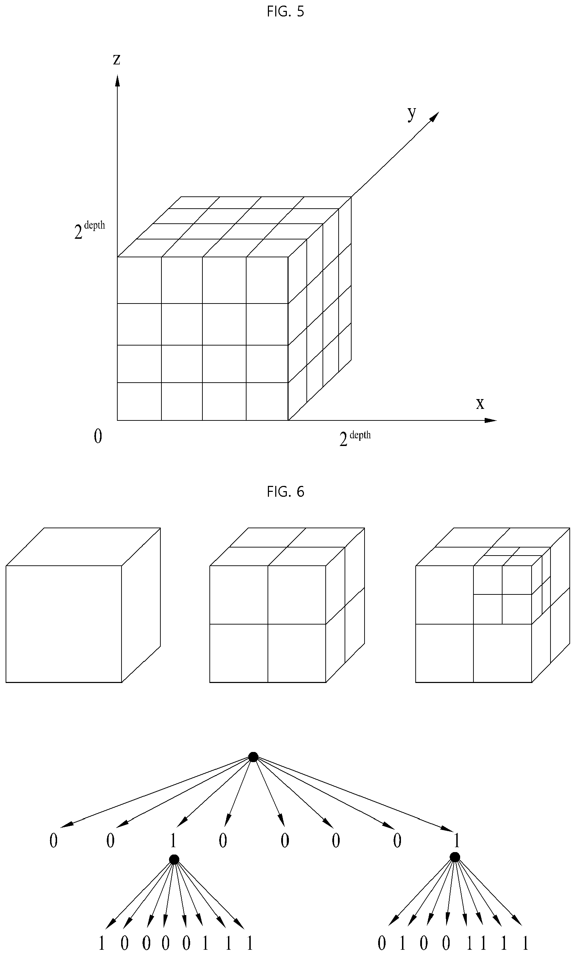

FIG. 5 shows an example of voxels according to embodiments.

FIG.5 shows voxels positioned in a 3D space represented by a coordinate system composed of three axes, which are the X-axis, the Y-axis, and the Z-axis. As described with reference to FIG. 4, the point cloud encoder (e.g., the quantizer 40001) may perform voxelization. Voxel refers to a 3D cubic space generated when a 3D space is divided into units (unit=1.0) based on the axes representing the 3D space (e.g., X-axis, Y-axis, and Z-axis). FIG. 5 shows an example of voxels generated through an octree structure in which a cubical axis-aligned bounding box defined by two poles (0, 0, 0) and ($2^d$, $2^d$, $2^d$) is recursively subdivided. One voxel includes at least one point. The spatial coordinates of a voxel may be estimated from the positional relationship with a voxel group. As described above, a voxel has an attribute (such as color or reflectance) like pixels of a 2D image/video. The details of the voxel are the same as those described with reference to FIG. 4, and therefore a description thereof is omitted.

FIG. 6 shows an example of an octree and occupancy code according to embodiments.

As described with reference to FIGS. 1 to 4, the point cloud content providing system (point cloud video encoder 10002) or the point cloud encoder (for example, the octree analyzer 40002) performs octree geometry coding (or octree coding) based on an octree structure to efficiently manage the region and/or position of the voxel.

The upper part of FIG. 6 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and ($2^d$, $2^d$, $2^d$). Here, $2^d$ may be set to a value constituting the smallest bounding box surrounding all points of the point cloud content (or point cloud video). Here, d denotes the depth of the octree. The value of d is determined in the following equation. In the following equation, ($x^{int}_n$, $y^{int}_n$, $z^{int}_n$) denotes the positions (or position values) of quantized points.

$$\mathrm{d} = Ceil\left(Log2\left(Max\left(x^{int}_n, y^{int}_n, z^{int}_n, n = 1, ..., N\right) + 1\right)\right)$$

As shown in the middle of the upper part of FIG. 6, the entire 3D space may be divided into eight spaces according to partition. Each divided space is represented by a cube with six faces. As shown in the upper right of FIG. 6, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 6 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 6 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (for example, the arithmetic encoder 40004) according to the embodiments may perform entropy encoding on the occupancy codes. In order to increase the compression efficiency, the point cloud encoder may perform intra/inter-coding on the occupancy codes. The reception device (for example, the reception device 10004 or the point cloud video decoder 10006) according to the embodiments reconstructs the octree based on the occupancy codes.

The point cloud encoder (for example, the point cloud encoder of FIG. 4 or the octree analyzer 40002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 40004) according to the embodiments may perform entropy coding on the positions (or position values) of the points.

The point cloud encoder (for example, the surface approximation analyzer 40003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud encoder according to the embodiments (for example, the geometry reconstructor 40005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

$$\text{i) } \begin{bmatrix} \mu_x \\ \mu_y \\ \mu_z \end{bmatrix} = \frac{1}{n} \sum_{i=1}^{n} \begin{bmatrix} x_i \\ y_i \\ z_i \end{bmatrix}; \text{ ii) } \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix}; \text{ iii) } \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For example, when the element x is the minimum, each vertex is projected on the x-axis with respect to the center of the block, and projected on the (y, z) plane. When the values obtained through projection on the (y, z) plane are (ai, bi), the value of $\theta$ is estimated through atan2(bi, ai), and the vertices are ordered based on the value of $\theta$. The table below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

TABLE 2-1 Triangles formed from vertices ordered 1,...,n

| n | triangles |
|---|---|
| 3 | (1,2,3) |
| 4 | (1,2,3), (3,4,1) |
| 5 | (1,2,3), (3,4,5), (5,1,3) |
| 6 | (1,2,3), (3,4,5), (5,6,1), (1,3,5) |
| 7 | (1,2,3), (3,4,5), (5,6,7), (7,1,3), (3,5,7) |
| 8 | (1,2,3), (3,4,5), (5,6,7), (7,8,1), (1,3,5), (5,7,1) |
| 9 | (1,2,3), (3,4,5), (5,6,7), (7,8,9), (9,1,3), (3,5,7), (7,9,3) |
| 10 | (1,2,3), (3,4,5), (5,6,7), (7,8,9), (9,10,1), (1,3,5), (5,7,9), (9,1,5) |

(continued)

| n | triangles |
| --- | --- |
| 11 | (1,2,3), (3,4,5), (5,6,7), (7,8,9), (9,10,11), (11,1,3), (3,5,7), (7,9,11), (11,3,7) |
| 12 | (1,2,3), (3,4,5), (5,6,7), (7,8,9), (9,10,11), (11,12,1), (1,3,5), (5,7,9), (9,11,1), |

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

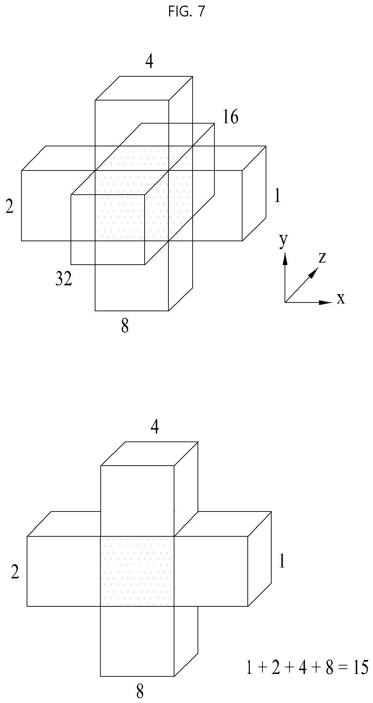

FIG. 7 shows an example of a neighbor node pattern according to embodiments.

In order to increase the compression efficiency of the point cloud video, the point cloud encoder according to the embodiments may perform entropy coding based on context adaptive arithmetic coding.

As described with reference to FIGS. 1 to 6, the point cloud content providing system or the point cloud encoder (for example, the point cloud video encoder 10002, the point cloud encoder or arithmetic encoder 40004 of FIG. 4) may perform entropy coding on the occupancy code immediately. In addition, the point cloud content providing system or the point cloud encoder may perform entropy encoding (intra encoding) based on the occupancy code of the current node and the occupancy of neighboring nodes, or perform entropy encoding (inter encoding) based on the occupancy code of the previous frame. A frame according to embodiments represents a set of point cloud videos generated at the same time. The compression efficiency of intra encoding/inter encoding according to the embodiments may depend on the number of neighboring nodes that are referenced. When the bits increase, the operation becomes complicated, but the encoding may be biased to one side, which may increase the compression efficiency. For example, when a 3-bit context is given, coding needs to be performed using $2^3 = 8$ methods. The part divided for coding affects the complexity of implementation. Accordingly, it is necessary to meet an appropriate level of compression efficiency and complexity.

FIG. 7 illustrates a process of obtaining an occupancy pattern based on the occupancy of neighbor nodes. The point cloud encoder according to the embodiments determines occupancy of neighbor nodes of each node of the octree and obtains a value of a neighbor pattern. The neighbor node pattern is used to infer the occupancy pattern of the node. The left part of FIG. 7 shows a cube corresponding to a node (a cube positioned in the middle) and six cubes (neighbor nodes) sharing at least one face with the cube. The nodes shown in the figure are nodes of the same depth. The numbers shown in the figure represent weights (1, 2, 4, 8, 16, and 32) associated with the six nodes, respectively. The weights are assigned sequentially according to the positions of neighboring nodes.

The right part of FIG. 7 shows neighbor node pattern values. A neighbor node pattern value is the sum of values multiplied by the weight of an occupied neighbor node (a neighbor node having a point). Accordingly, the neighbor node pattern values are 0 to 63. When the neighbor node pattern value is 0, it indicates that there is no node having a point (no occupied node) among the neighbor nodes of the node. When the neighbor node pattern value is 63, it indicates that all neighbor nodes are occupied nodes. As shown in the figure, since neighbor nodes to which weights 1, 2, 4, and 8 are assigned are occupied nodes, the neighbor node pattern value is 15, the sum of 1, 2, 4, and 8. The point cloud encoder may perform coding according to the neighbor node pattern value (for example, when the neighbor node pattern value is 63, 64 kinds of coding may be performed). According to embodiments, the point cloud encoder may reduce coding complexity by changing a neighbor node pattern value (for example, based on a table by which 64 is changed to 10 or 6).

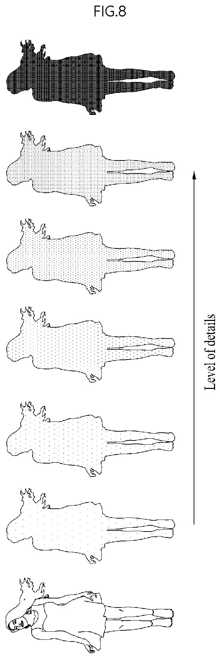

FIG. 8 illustrates an example of point configuration in each LOD according to embodiments.

As described with reference to FIGS. 1 to 7, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (for example, the LOD generator 40009) may classify (reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

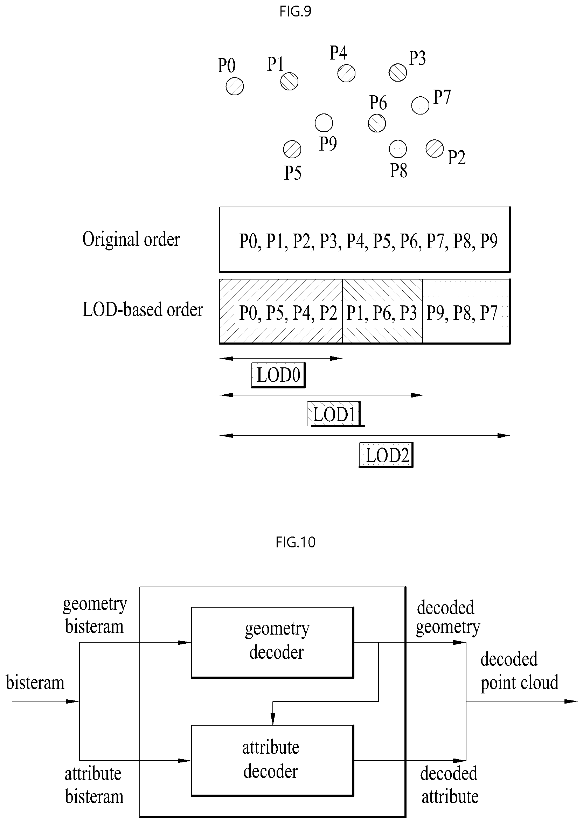

FIG. 9 illustrates an example of point configuration for each LOD according to embodiments.

As described with reference to FIGS. 1 to 8, the point cloud content providing system, or the point cloud encoder (for example, the point cloud video encoder 10002, the point cloud encoder of FIG. 4, or the LOD generator 40009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 9 shows examples (P0 to P9) of points of the point cloud content distributed in a 3D space. In FIG. 9, the original order represents the order of points P0 to P9 before LOD generation. In FIG. 9, the LOD based order represents the order of points according to the LOD generation. Points are reorganized by LOD. Also, a high LOD contains the points belonging to lower LODs. As shown in FIG. 9, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 4, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (for example, the coefficient quantizer 40011) may quantize and inversely quantize the residuals (which may be called residual attributes, residual attribute values, or attribute prediction residuals) obtained by subtracting a predicted attribute (attribute value) from the attribute (attribute value) of each point. The quantization process is configured as shown in the following table.

TABLE Attribute prediction residuals quantization pseudo code

```
int PCCQuantization(int value, int quantStep) {
if( value >=0) {
return floor(value / quantStep + 1.0 / 3.0);
} else {
return -floor(-value / quantStep + 1.0 / 3.0);
}
}
```

TABLE Attribute prediction residuals inverse quantization pseudo code

```
int PCCInverseQuantization(int value, int quantStep) {
if( quantStep ==0) {
return value;
} else {
return value * quantStep;
}
}
```

When the predictor of each point has neighbor points, the point cloud encoder (e.g., the arithmetic encoder 40012) according to the embodiments may perform entropy coding on the quantized and inversely quantized residual values as described above. When the predictor of each point has no neighbor point, the point cloud encoder according to the embodiments (for example, the arithmetic encoder 40012) may perform entropy coding on the attributes of the corresponding point without performing the above-described operation.

The point cloud encoder according to the embodiments (for example, the lifting transformer 40010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 40011) according to the embodiments quantizes the predicted attribute values. In addition, the point cloud encoder (e.g., the arithmetic encoder 40012) performs entropy coding on the quantized attribute values.

The point cloud encoder (for example, the RAHT transformer 40008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l_{x,y,z}}$ denotes the average attribute value of voxels at level $l$. $g_{l_{x,y,z}}$ may be calculated based on $g_{l+1\ 2x,y,z}$ and $g_{l+1\ 2x+1,y,z}$. The weights for $g_{l\ 2x,y,z}$ and $g_{l\ 2x+1,y,z}$ are $w1 = w_{l\ 2x,y,z}$ and $w2 = w_{l\ 2x+1,y,z}$.

$$\begin{bmatrix} g_{l-1\ x,y,z} \\ h_{l-1\ x,y,z} \end{bmatrix} = T_{w1\ w2} \begin{bmatrix} g_{l\ 2x,y,z} \\ g_{l\ 2x+1,y,z} \end{bmatrix} , \quad T_{w1\ w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1\ x,y,z}$ is a low-pass value and is used in the merging process at the next higher level. $h_{l-1\ x,y,z}$ denotes high-pass coefficients. The high-pass coefficients at each step are quantized and subjected to entropy coding (for example, encoding by the arithmetic encoder 400012). The weights are calculated as $w_{l-1\ x,y,z} = w_{l\ 2x,y,z} + w_{l\ 2x+1,y,z}$. The root node is created through $g_{1\ 0,0,0}$ and $g_{1\ 0,0,1}$ as follows.

$$\begin{bmatrix} gDC \\ h_{0_{0,0,0}} \end{bmatrix} = T_{w1000\ w1001} \begin{bmatrix} g_{1\ 0,0,0z} \\ g_{1_{0,0,1}} \end{bmatrix}$$

FIG. 10 illustrates a point cloud decoder according to embodiments.

The point cloud decoder illustrated in FIG. 10 is an example of the point cloud video decoder 10006 described in FIG. 1, and may perform the same or similar operations as the operations of the point cloud video decoder 10006 illustrated in FIG. 1. As shown in the figure, the point cloud decoder may receive a geometry bitstream and an attribute bitstream contained in one or more bitstreams. The point cloud decoder includes a geometry decoder and an attribute decoder. The geometry decoder performs geometry decoding on the geometry bitstream and outputs decoded geometry. The attribute decoder performs attribute decoding based on the decoded geometry and the attribute bitstream, and outputs decoded attributes. The decoded geometry and decoded attributes are used to reconstruct point cloud content (a decoded point cloud).

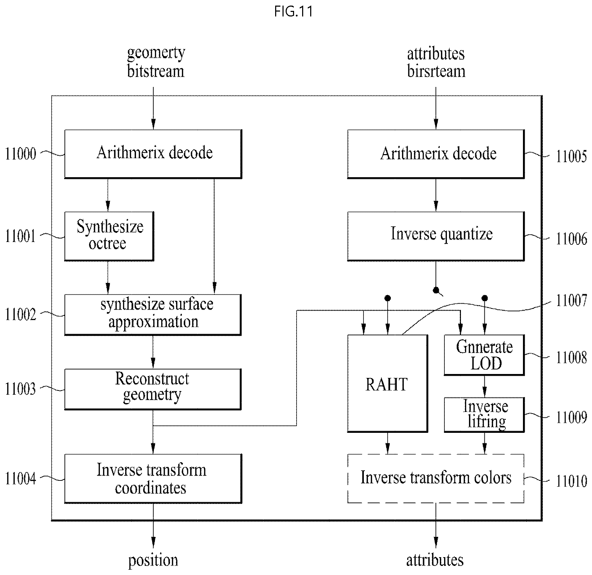

FIG. 11 illustrates a point cloud decoder according to embodiments.

The point cloud decoder illustrated in FIG. 11 is an example of the point cloud decoder illustrated in FIG. 10, and may perform a decoding operation, which is an inverse process of the encoding operation of the point cloud encoder illustrated in FIGS. 1 to 9.

As described with reference to FIGS. 1 and 10, the point cloud decoder may perform geometry decoding and attribute decoding. The geometry decoding is performed before the attribute decoding.

The point cloud decoder according to the embodiments includes an arithmetic decoder (Arithmetic decode) 11000, an octree synthesizer (Synthesize octree) 11001, a surface approximation synthesizer (Synthesize surface approximation) 11002, and a geometry reconstructor (Reconstruct geometry) 11003, a coordinate inverse transformer (Inverse transform coordinates) 11004, an arithmetic decoder (Arithmetic decode) 11005, an inverse quantizer (Inverse quantize) 11006, a RAHT transformer 11007, an LOD generator (Generate LOD) 11008, an inverse lifter (inverse lifting) 11009, and/or a color inverse transformer (Inverse transform colors) 11010.

The arithmetic decoder 11000, the octree synthesizer 11001, the surface approximation synthesizer 11002, and the geometry reconstructor 11003, and the coordinate inverse transformer 11004 may perform geometry decoding. The geometry decoding according to the embodiments may include direct coding and trisoup geometry decoding. The direct coding and trisoup geometry decoding are selectively applied. The geometry decoding is not limited to the above-described example, and is performed as an inverse process of the geometry encoding described with reference to FIGS. 1 to 9.

The arithmetic decoder 11000 according to the embodiments decodes the received geometry bitstream based on the arithmetic coding. The operation of the arithmetic decoder 11000 corresponds to the inverse process of the arithmetic encoder 40004.

The octree synthesizer 11001 according to the embodiments may generate an octree by acquiring an occupancy code from the decoded geometry bitstream (or information on the geometry secured as a result of decoding). The occupancy code is configured as described in detail with reference to FIGS. 1 to 9.

When the trisoup geometry encoding is applied, the surface approximation synthesizer 11002 according to the embodiments may synthesize a surface based on the decoded geometry and/or the generated octree.

The geometry reconstructor 11003 according to the embodiments may regenerate geometry based on the surface and/or the decoded geometry. As described with reference to FIGS. 1 to 9, direct coding and trisoup geometry encoding are selectively applied. Accordingly, the geometry reconstructor 11003 directly imports and adds position information about the points to which direct coding is applied. When the trisoup geometry encoding is applied, the geometry reconstructor 11003 may reconstruct the geometry by performing the reconstruction operations of the geometry reconstructor 40005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 11004 according to the embodiments may acquire positions of the points by transforming the coordinates based on the reconstructed geometry.

The arithmetic decoder 11005, the inverse quantizer 11006, the RAHT transformer 11007, the LOD generator 11008, the inverse lifter 11009, and/or the color inverse transformer 11010 may perform the attribute decoding described with reference to FIG. 10. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 11005 according to the embodiments decodes the attribute bitstream by arithmetic coding.

The inverse quantizer 11006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 11007, the LOD generator 11008, and/or the inverse lifter 11009 may process the reconstructed geometry and the inversely quantized attributes. As described above, the RAHT transformer 11007, the LOD generator 11008, and/or the inverse lifter 11009 may selectively perform a decoding operation corresponding to the encoding of the point cloud encoder.

The color inverse transformer 11010 according to the embodiments performs inverse transform coding to inversely transform a color value (or texture) included in the decoded attributes. The operation of the color inverse transformer 11010 may be selectively performed based on the operation of the color transformer 40006 of the point cloud encoder.

Although not shown in the figure, the elements of the point cloud decoder of FIG. 11 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 11 described above. Additionally, the one or more processors may operate or execute a set of software programs and/or instructions for performing the operations and/or functions of the elements of the point cloud decoder of FIG. 11.

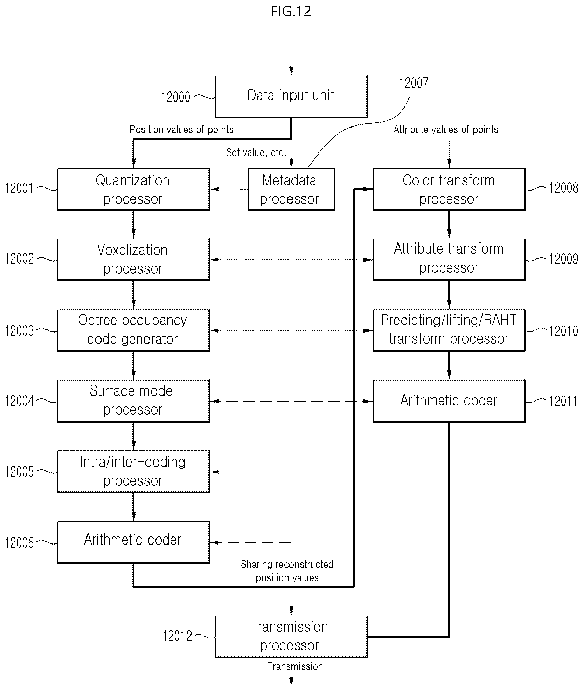

FIG. 12 illustrates a transmission device according to embodiments.

The transmission device shown in FIG. 12 is an example of the transmission device 10000 of FIG. 1 (or the point cloud encoder of FIG. 4). The transmission device illustrated in FIG. 12 may perform one or more of the operations and methods the same as or similar to those of the point cloud encoder described with reference to FIGS. 1 to 9. The transmission device according to the embodiments may include a data input unit 12000, a quantization processor 12001, a voxelization processor 12002, an octree occupancy code generator 12003, a surface model processor 12004, an intra/inter-coding processor 12005, an arithmetic coder 12006, a metadata processor 12007, a color transform processor 12008, an attribute transform processor 12009, a prediction/lifting/RAHT transform processor 12010, an arithmetic coder 12011 and/or a transmission processor 12012.

The data input unit 12000 according to the embodiments receives or acquires point cloud data. The data input unit 12000 may perform an operation and/or acquisition method the same as or similar to the operation and/or acquisition method of the point cloud video acquirer 10001 (or the acquisition process 20000 described with reference to FIG. 2).

The data input unit 12000, the quantization processor 12001, the voxelization processor 12002, the octree occupancy code generator 12003, the surface model processor 12004, the intra/inter-coding processor 12005, and the arithmetic coder 12006 perform geometry encoding. The geometry encoding according to the embodiments is the same as or similar to the geometry encoding described with reference to FIGS. 1 to 9, and thus a detailed description thereof is omitted.

The quantization processor 12001 according to the embodiments quantizes geometry (e.g., position values of points). The operation and/or quantization of the quantization processor 12001 is the same as or similar to the operation and/or quantization of the quantizer 40001 described with reference to FIG. 4. Details are the same as those described with reference to FIGS. 1 to 9.

The voxelization processor 12002 according to the embodiments voxelizes the quantized position values of the points. The voxelization processor 120002 may perform an operation and/or process the same or similar to the operation and/or the voxelization process of the quantizer 40001 described with reference to FIG. 4. Details are the same as those described with reference to FIGS. 1 to 9.

The octree occupancy code generator 12003 according to the embodiments performs octree coding on the voxelized positions of the points based on an octree structure. The octree occupancy code generator 12003 may generate an occupancy code. The octree occupancy code generator 12003 may perform an operation and/or method the same as or similar to the operation and/or method of the point cloud encoder (or the octree analyzer 40002) described with reference to FIGS. 4 and 6. Details are the same as those described with reference to FIGS. 1 to 9.

The surface model processor 12004 according to the embodiments may perform trisoup geometry encoding based on a surface model to reconstruct the positions of points in a specific region (or node) on a voxel basis. The surface model processor 12004 may perform an operation and/or method the same as or similar to the operation and/or method of the point cloud encoder (for example, the surface approximation analyzer 40003) described with reference to FIG. 4. Details are the same as those described with reference to FIGS. 1 to 9.

The intra/inter-coding processor 12005 according to the embodiments may perform intra/inter-coding on point cloud data. The intra/inter-coding processor 12005 may perform coding the same as or similar to the intra/inter-coding described with reference to FIG. 7. Details are the same as those described with reference to FIG. 7. According to embodiments, the intra/inter-coding processor 12005 may be included in the arithmetic coder 12006.

The arithmetic coder 12006 according to the embodiments performs entropy encoding on an octree of the point cloud data and/or an approximated octree. For example, the encoding scheme includes arithmetic encoding. The arithmetic coder 12006 performs an operation and/or method the same as or similar to the operation and/or method of the arithmetic encoder 40004.

The metadata processor 12007 according to the embodiments processes metadata about the point cloud data, for example, a set value, and provides the same to a necessary processing process such as geometry encoding and/or attribute encoding. Also, the metadata processor 12007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 12008, the attribute transform processor 12009, the prediction/lifting/RAHT transform processor 12010, and the arithmetic coder 12011 perform the attribute encoding. The attribute encoding according to the embodiments is the same as or similar to the attribute encoding described with reference to FIGS. 1 to 9, and thus a detailed description thereof is omitted.

The color transform processor 12008 according to the embodiments performs color transform coding to transform color values included in attributes. The color transform processor 12008 may perform color transform coding based on the reconstructed geometry. The reconstructed geometry is the same as described with reference to FIGS. 1 to 9. Also, it performs an operation and/or method the same as or similar to the operation and/or method of the color transformer 40006 described with reference to FIG. 4 is performed. The detailed description thereof is omitted.

The attribute transform processor 12009 according to the embodiments performs attribute transformation to transform the attributes based on the reconstructed geometry and/or the positions on which geometry encoding is not performed. The attribute transform processor 12009 performs an operation and/or method the same as or similar to the operation and/or method of the attribute transformer 40007 described with reference to FIG. 4. The detailed description thereof is omitted. The prediction/lifting/RAHT transform processor 12010 according to the embodiments may code the transformed attributes by any one or a combination of RAHT coding, prediction transform coding, and lifting transform coding. The prediction/lifting/RAHT transform processor 12010 performs at least one of the operations the same as or similar to the operations of the RAHT transformer 40008, the LOD generator 40009, and the lifting transformer 40010 described with reference to FIG. 4. In addition, the prediction transform coding, the lifting transform coding, and the RAHT transform coding are the same as those described with reference to FIGS. 1 to 9, and thus a detailed description thereof is omitted.

The arithmetic coder 12011 according to the embodiments may encode the coded attributes based on the arithmetic coding. The arithmetic coder 12011 performs an operation and/or method the same as or similar to the operation and/or method of the arithmetic encoder 400012.

The transmission processor 12012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom00 and one or more attribute bitstreams Attr00 and Attr10.

A slice refers to a series of syntax elements representing the entirety or part of a coded point cloud frame.

The TPS according to the embodiments may include information about each tile (for example, coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 12007 according to the embodiments may generate and/or process the signaling information and transmit the same to the transmission processor 12012. According to embodiments, the elements to perform geometry encoding and the elements to perform attribute encoding may share data/information with each other as indicated by dotted lines. The transmission processor 12012 according to the embodiments may perform an operation and/or transmission method the same as or similar to the operation and/or transmission method of the transmitter 10003. Details are the same as those described with reference to FIGS. 1 and 2, and thus a description thereof is omitted.

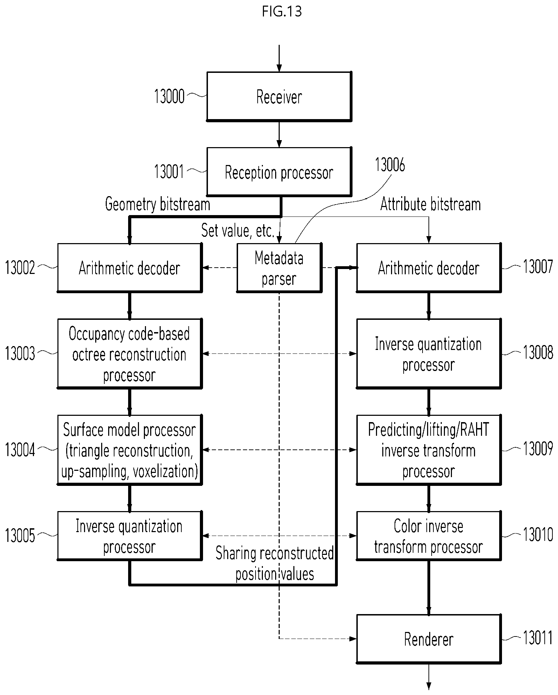

FIG. 13 illustrates a reception device according to embodiments.

The reception device illustrated in FIG. 13 is an example of the reception device 10004 of FIG. 1 (or the point cloud decoder of FIGS. 10 and 11). The reception device illustrated in FIG. 13 may perform one or more of the operations and methods the same as or similar to those of the point cloud decoder described with reference to FIGS. 1 to 11.

The reception device according to the embodiment includes a receiver 13000, a reception processor 13001, an arithmetic decoder 13002, an occupancy code-based octree reconstruction processor 13003, a surface model processor (triangle reconstruction, up-sampling, voxelization) 13004, an inverse quantization processor 13005, a metadata parser 13006, an arithmetic decoder 13007, an inverse quantization processor 13008, a prediction /lifting/RAHT inverse transform processor 13009, a color inverse transform processor 13010, and/or a renderer 13011. Each element for decoding according to the embodiments may perform an inverse process of the operation of a corresponding element for encoding according to the embodiments.

The receiver 13000 according to the embodiments receives point cloud data. The receiver 13000 may perform an operation and/or reception method the same as or similar to the operation and/or reception method of the receiver 10005 of FIG. 1. The detailed description thereof is omitted.

The reception processor 13001 according to the embodiments may acquire a geometry bitstream and/or an attribute bitstream from the received data. The reception processor 13001 may be included in the receiver 13000.

The arithmetic decoder 13002, the occupancy code-based octree reconstruction processor 13003, the surface model processor 13004, and the inverse quantization processor 1305 may perform geometry decoding. The geometry decoding according to embodiments is the same as or similar to the geometry decoding described with reference to FIGS. 1 to 10, and thus a detailed description thereof is omitted.

The arithmetic decoder 13002 according to the embodiments may decode the geometry bitstream based on arithmetic coding. The arithmetic decoder 13002 performs an operation and/or coding the same as or similar to the operation and/or coding of the arithmetic decoder 11000.

The occupancy code-based octree reconstruction processor 13003 according to the embodiments may reconstruct an octree by acquiring an occupancy code from the decoded geometry bitstream (or information about the geometry secured as a result of decoding). The occupancy code-based octree reconstruction processor 13003 performs an operation and/or method the same as or similar to the operation and/or octree generation method of the octree synthesizer 11001. When the trisoup geometry encoding is applied, the surface model processor 1302 according to the embodiments may perform trisoup geometry decoding and related geometry reconstruction (for example, triangle reconstruction, upsampling, voxelization) based on the surface model method. The surface model processor 1302 performs an operation the same as or similar to that of the surface approximation synthesizer 11002 and/or the geometry reconstructor 11003.

The inverse quantization processor 1305 according to the embodiments may inversely quantize the decoded geometry.

The metadata parser 1306 according to the embodiments may parse metadata contained in the received point cloud data, for example, a set value. The metadata parser 1306 may pass the metadata to geometry decoding and/or attribute decoding. The metadata is the same as that described with reference to FIG. 12, and thus a detailed description thereof is omitted.

The arithmetic decoder 13007, the inverse quantization processor 13008, the prediction/lifting/RAHT inverse transform processor 13009 and the color inverse transform processor 13010 perform attribute decoding. The attribute decoding is the same as or similar to the attribute decoding described with reference to FIGS. 1 to 10, and thus a detailed description thereof is omitted.

The arithmetic decoder 13007 according to the embodiments may decode the attribute bitstream by arithmetic coding. The arithmetic decoder 13007 may decode the attribute bitstream based on the reconstructed geometry. The arithmetic decoder 13007 performs an operation and/or coding the same as or similar to the operation and/or coding of the arithmetic decoder 11005.

The inverse quantization processor 13008 according to the embodiments may inversely quantize the decoded attribute bitstream. The inverse quantization processor 13008 performs an operation and/or method the same as or similar to the operation and/or inverse quantization method of the inverse quantizer 11006.

The prediction/lifting/RAHT inverse transformer 13009 according to the embodiments may process the reconstructed geometry and the inversely quantized attributes. The prediction/lifting/RAHT inverse transform processor 1301 performs one or more of operations and/or decoding the same as or similar to the operations and/or decoding of the RAHT transformer 11007, the LOD generator 11008, and/or the inverse lifter 11009. The color inverse transform processor 13010 according to the embodiments performs inverse transform coding to inversely transform color values (or textures) included in the decoded attributes. The color inverse transform processor 13010 performs an operation and/or inverse transform coding the same as or similar to the operation and/or inverse transform coding of the color inverse transformer 11010. The renderer 13011 according to the embodiments may render the point cloud data.

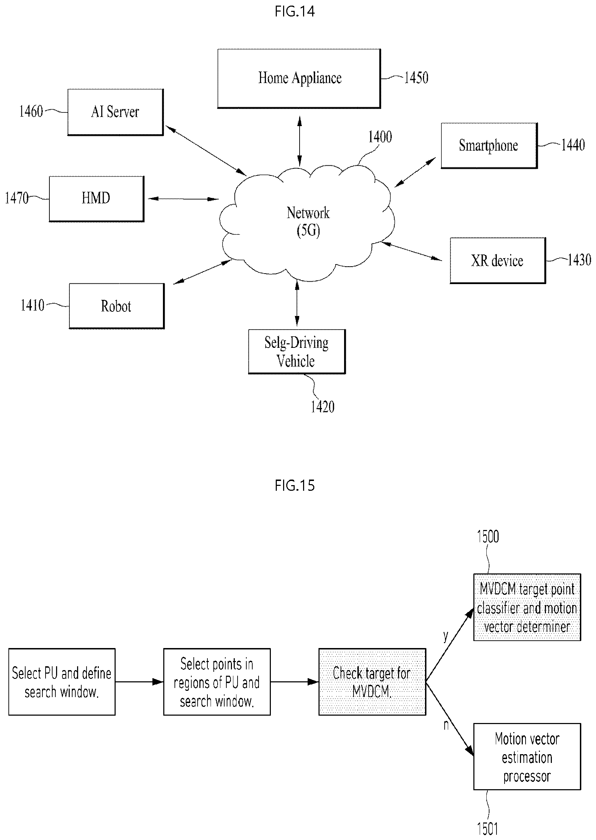

FIG. 14 illustrates an exemplary structure operable in connection with point cloud data transmission/reception methods/devices according to embodiments.

The structure of FIG. 14 represents a configuration in which at least one of a server 1460, a robot 1410, a self-driving vehicle 1420, an XR device 1430, a smartphone 1440, a home appliance 1450, and/or a head-mount display (HMD) 1470 is connected to the cloud network 1400. The robot 1410, the self-driving vehicle 1420, the XR device 1430, the smartphone 1440, or the home appliance 1450 is called a device. Further, the XR device 1430 may correspond to a point cloud data (PCC) device according to embodiments or may be operatively connected to the PCC device.

The cloud network 1400 may represent a network that constitutes part of the cloud computing infrastructure or is present in the cloud computing infrastructure. Here, the cloud network 1400 may be configured using a 3G network, 4G or Long Term Evolution (LTE) network, or a 5G network.

The server 1460 may be connected to at least one of the robot 1410, the self-driving vehicle 1420, the XR device 1430, the smartphone 1440, the home appliance 1450, and/or the HMD 1470 over the cloud network 1400 and may assist in at least a part of the processing of the connected devices 1410 to 1470.

The HMD 1470 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1410 to 1450 to which the above-described technology is applied will be described. The devices 1410 to 1450 illustrated in FIG. 14 may be operatively connected/coupled to a point cloud data transmission device and reception according to the above-described embodiments.

<PCC+XR>

The XR/PCC device 1430 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1430 may analyze 3D point cloud data or image data acquired through various sensors or from an external device and generate position data and attribute data about 3D points. Thereby, the XR/PCC device 1430 may acquire information about the surrounding space or a real object, and render and output an XR object. For example, the XR/PCC device 1430 may match an XR object including auxiliary information about a recognized object with the recognized object and output the matched XR object.

<PCC+XR+Mobile phone>

The XR/PCC device 1430 may be implemented as a mobile phone 1440 by applying PCC technology.
The mobile phone 1440 may decode and display point cloud content based on the PCC technology.

<PCC+Self-driving+XR>

The self-driving vehicle 1420 may be implemented as a mobile robot, a vehicle, an unmanned aerial vehicle, or the like by applying the PCC technology and the XR technology.
The self-driving vehicle 1420 to which the XR/PCC technology is applied may represent a self-driving vehicle provided with means for providing an XR image, or a self-driving vehicle that is a target of control/interaction in the XR image. In particular, the self-driving vehicle 1420 which is a target of control/interaction in the XR image may be distinguished from the XR device 1430 and may be operatively connected thereto.
The self-driving vehicle 1420 having means for providing an XR/PCC image may acquire sensor information from sensors including a camera, and output the generated XR/PCC image based on the acquired sensor information. For example, the self-driving vehicle 1420 may have an HUD and output an XR/PCC image thereto, thereby providing an occupant with an XR/PCC object corresponding to a real object or an object present on the screen.
When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.
The virtual reality (VR) technology, the augmented reality (AR) technology, the mixed reality (MR) technology and/or the point cloud compression (PCC) technology according to the embodiments are applicable to various devices.
In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.
Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.
The PCC method/device according to the embodiments may be applied to a vehicle that provides a self-driving service.
A vehicle that provides the self-driving service is connected to a PCC device for wired/wireless communication.
When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.
A method/device for transmitting point cloud data according to embodiments is interpreted as terms referring to the transmitting device 10000, point cloud video encoder 10002, or transmitter 10003 of FIG. 1, the acquisition 20000/encoding 20001/transmission 20002 of FIG. 2, the encoder of FIG. 4, the transmitting device of FIG. 12, the device of FIG. 14, and/or a processor (motion vector classifier) of FIG. 15.
A method/device for receiving point cloud data according to embodiments is interpreted as terms referring to the reception device 10004, receiver 10005, or point cloud video decoder 10006 of FIG. 1, the transmission 20002/decoding 20003/rendering 20004 of FIG. 2, the decoder of FIGS. 10 and 11, the reception device of FIG. 13, the device of FIG. 14, and/or the processor (motion vector classifier) of FIG. 15.

In addition, the methods/devices for transmitting and receiving point cloud data according to the embodiments may be simply referred to as methods/devices according to the embodiments.

According to embodiments, geometry data, geometry information, and position information that constitute point cloud data are interpreted to have the same meaning. Attribute data, attribute information, and attribute data that constitute point cloud data are also interpreted to have the same meaning.

The method/device according to the embodiments may define prediction units adaptive to data distribution for PCC content compression to enable encoding/decoding.

Encoding/decoding methods according to embodiments may compress and reconstruct point cloud data on a frame-by-frame basis. In particular, according to embodiments, prediction units (PUs) for applying inter-frame prediction techniques may be defined and used as a method for improving compression efficiency for point cloud data with one or more frames. The PU according to embodiments may be referred to by various names such as a unit, a first unit, a region, a first region, etc. depending on the embodiments.

Embodiments may provide methods of compressing data composed of point clouds. Specifically, methods of handling a PU containing a very small number of points will be described to achieve efficient compression of point clouds with one or more frames.

For a method applied for motion estimation in the Exploration Model (EM) (inter prediction) technology, there may be a look-up table (LUT) consisting of a minimum of 6 and a maximum of 26 unit vectors in different directions. Motion compensation is performed based on the best motion vector, where the best motion vector is obtained by a process of finding the optimal motion vector that needs to be added to the vector difference of a point, which is the subject of motion estimation, in order to transform the corresponding point into a point in the current frame.

In this case, information on unit vectors defined by the LUT is defined by the smallest LUT or searching pattern, which is composed of 6 vectors that may be obtained by rotating 90 degrees for each axis. The largest LUT may be applied as a searching pattern composed of 26 unit vectors, each at an angle of 45 degrees in all directions. Users need to manually replace the LUT according to their needs, instead of adaptively applying the LUT depending on situations. Such a searching pattern has the advantage of finding motion vectors by performing repetitive searches in predetermined exploration directions, but the searching pattern involves finding the value of scale factor x searching pattern with the smallest difference for the value of each target vector - scale factor x searching pattern and iteratively adjusting the scale factor while searching for the closest motion vector.

However, this method may be applied in cases where the number of points within a search window area, which are targets for finding motion vectors, and the number of points within the current node in the current frame are excessively low. If this method is applied to estimate motion vectors for only two or three points, it may result in cost wastage. Since corresponding information is determined based on rate distortion optimization (RDO) values, accuracy may also decrease for cases with a very low number of points.

In embodiments, there are provided methods of directly performing motion vector estimation after a separate classification process when the number of target points for motion vector estimation is below a certain threshold, which are different from conventional motion vector estimation methods.

According to the embodiments, if the number of points included in a search window and prediction unit is below a certain threshold, the points may be processed separately from other points based on a motion vector direct coding mode (MVDCM).

If the number of points included in the search window and prediction unit is extremely small, the motion vector estimation process may be omitted.

If the number of points in the search window and prediction unit is extremely small, the transmitter may omit motion vector information. In this case, the receiver may calculate and apply motion vectors based on information indicating the state of the search window and prediction unit.

For the MVDCM, motion vectors may be calculated in a manner distinct from the conventional motion vector estimation/compensation method based on the existing prediction unit.

Embodiments may be subject to change and also be combined with each other. The terms used in this document may be understood based on their intended meanings within the accepted scope of the field. While the present disclosure is described based on subsampling of attribute information (attribute data), the present disclosure may also be applied in the following cases: when subsampling is applied to position information (geometry data), when subsampling is applied to individual points, or when subsampling is applied to configure information that constitutes point clouds in an asymmetric manner.

Although the operations of the method/device according to the embodiments will be described based on position information, the operations may also be applied to point units, asymmetric partitioning units, attribute information units, or both position and attribute information units.

FIG. 15 illustrates a motion vector classifier according to embodiments.

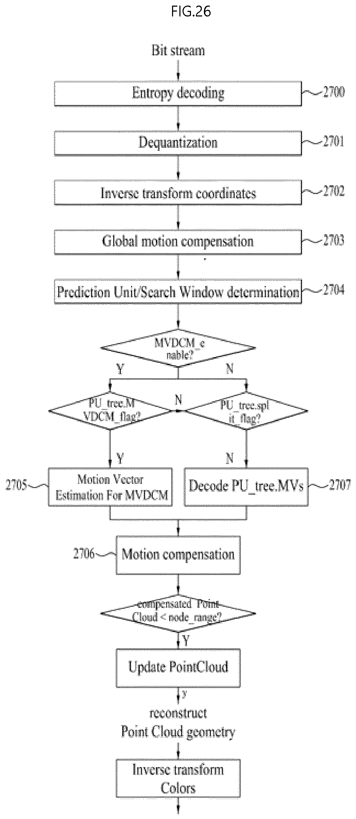

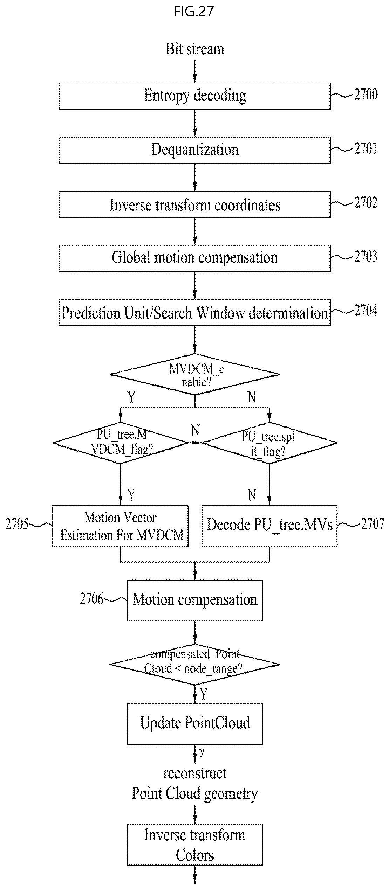

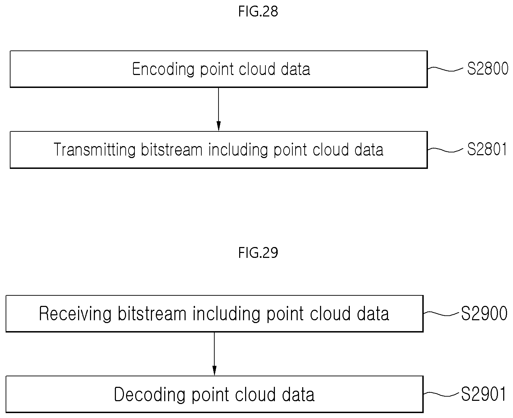

The motion vector classifier according to the embodiments shown in FIG. 15 may be included in or related to the transmission device 10000, point cloud video encoder 10002, reception device 10004, or point cloud video decoder 10006 in FIG. 1, the encoding 20001 or decoding 20003 in FIG. 2, the encoder in FIG. 4, the decoder in FIGS. 10 and 11, the transmission device in FIG. 12, the reception device in FIG. 13, the XR device 1430 in FIG. 14, an encoding method in FIG. 26, a decoding method in FIG. 27, a transmission method in FIG. 28, and/or a reception method in FIG. 29.

Each component in FIG. 15 may correspond to hardware, software, processors, and/or combinations thereof.

The motion vector classifier according to the embodiments (which may be referred to a processor, controller, etc.,) may include a classifier 1500 and a motion vector estimator 1501.

FIG. 15 shows a structure for selecting a motion vector as an obj ect that requires direct coding and directly calculating and classifying the motion vector with no estimation if the number of points included in a search target is below a threshold. If there are point clouds for reference and current frames and a prediction unit (PU) is defined in the current frame, the area of the search window may be defined as follows.

$$\text{Search window}[3] = \text{PU}[3] + \text{motion\_window\_size}[3]$$

The search window, PU, and motion_window_size may take the form of arrays with three values each. The search window and PU may be in the shape of a cube or cuboid, and the search window may include the PU and cover an area larger than the PU. Depending on whether search window and PU are defined as a cube or cuboid, the size of each of the three axes may be different or the same.

After the regions of the PU and search window are defined, points within the PU region from the point cloud of the current frame are selected as targets for motion vector estimation. Similarly, points within the search window region from the point cloud of the reference frame are selected as targets for motion vector estimation. This constitutes the primary classification process.

The reference frame is a frame used as a reference for encoding/decoding the current frame. The reference frame may be encoded/decoded before the current frame.

When the number of points within the search target is below the threshold, the motion vector classifier according to the embodiments may select PUs on the current frame and/or define the search window on the reference frame.

The motion vector classifier according to the embodiments may select points corresponding to the PU and search window. In this case, the points may be selected depending on the shapes and sizes of the PU and search window.

The motion vector classifier according to the embodiments may determine whether the points of the current frame are subject to the MVDCM (which is referred to as direct coding, specific coding modes, etc.). The motion vector classifier may count the number of points within the PU and/or search window.

When the points are subject to the MVDCM, the classifier 1500 according to the embodiments may determine motion vectors for the MVCDCM.

When the points are not subject to the MVDCM, the motion vector estimator 1501 according to the embodiments may perform motion vector estimation.

The current frame may be referred to as a first frame, and the reference frame may be referred to as a second frame.

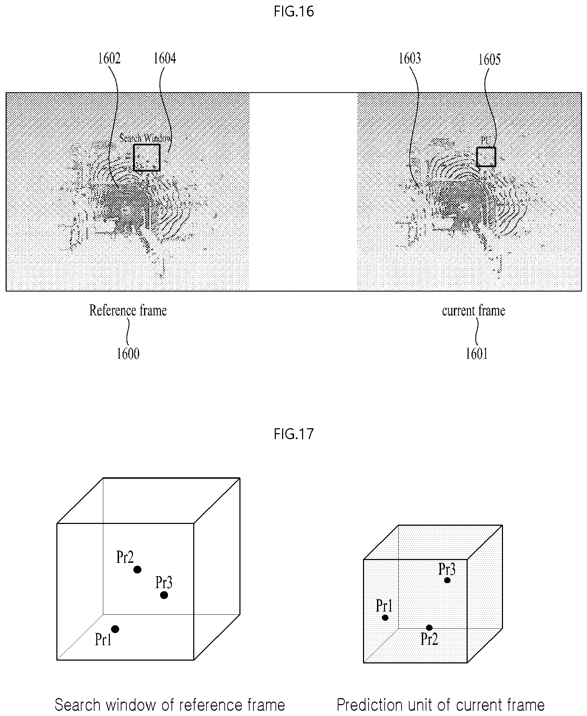

FIG. 16 illustrates reference and current frames according to embodiments.

Specifically, FIG. 16 shows the reference and current frames used in motion vector-based encoding/decoding shown in in FIG. 15.

As shown in FIG. 16, points within regions located at similar positions in two frames may be selected as targets for motion vector estimation.

The encoder/decoder according to embodiments may encode/decode the current frame 1601. The current frame 1601 may include points 1603 (geometry data and/or attribute data). To encode/decode the current frame 1601, the reference frame 1600 may be referenced. The reference frame 1600 may include encoded/decoded points 1602. If the encoding/decoding target in the current frame 1601 is a PU 1602, information to be used for prediction of points may be searched based on the search window 1604 of the reference frame 1600.

FIG. 17 illustrates points included in a search window and/or PU according to embodiments.

The search window and PU in FIG. 17 corresponds to a detailed example of the search window and PU included in the reference frame and current frame as described above with reference to FIGS. 15 and 16.

As shown in FIG. 16, once the ranges of the search window and PU are determined, the number of points included within the corresponding range is counted for each region.

When there are a small number of points in the search window of the reference frame, if the number of points in the search window is the same as or different from the number of points in the PU, and if the number of points in the PU is the same as the number of reference points for the MVDCM, the points may be considered as targets for the MVDCM.

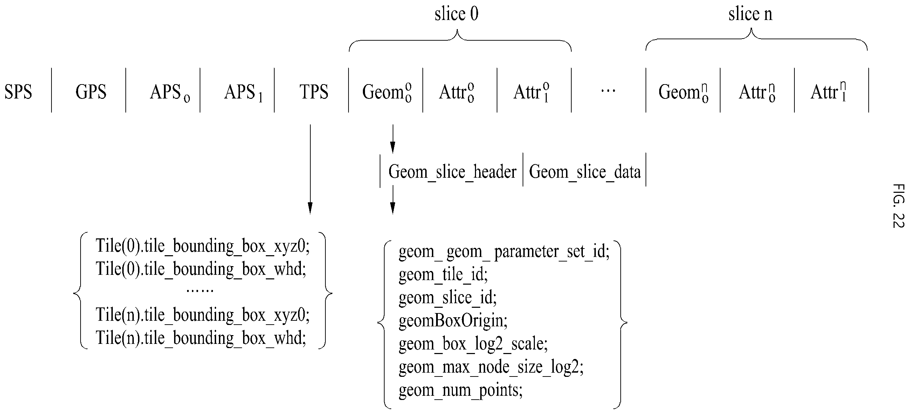

Signaling for indicating that the corresponding PU is configured for the MVDCM and signaling for representing reference information on points subject to be classified as the MVDCM may be added to a bitstream in FIG. 22.

For example, the search window of the reference frame may include the following three points: Pr1, Pr2, and Pr3. The PU of the current frame may include the following three points: Pc1, Pc2, and Pc3.

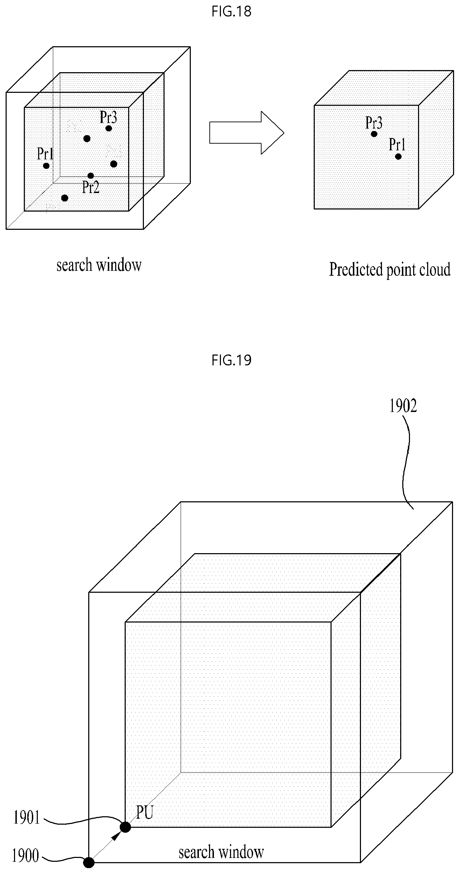

FIG. 18, FIG. 19, FIG. 20, and FIG. 21 illustrate motion vector estimation operations according to embodiments.

The motion vector estimation shown in FIG. 18, FIG. 19, FIG. 20, and FIG. 21 may be performed by the methods/devices for transmitting and receiving point cloud data, each of which includes or is related to the motion vector classifier (processor or controller) in FIG. 15. Hereinafter, a processor that performs operations according to embodiments may be referred to as a motion vector estimator.

A motion vector estimation method (or motion vector estimator) according to embodiments may encompass various methods. In an embodiment, one of the following methods may be applied.

If the current PU satisfies MVDCM conditions, information on points included in the search window may be directly inherited.

If an inherited point is outside the PU range, the point may be excluded from a predicted point cloud target as shown in FIG. 18.

For example, in FIG. 17, if the PU has the following three points: Pc1, Pc2, and Pc3 and the number of points in the PU satisfies MVCDM conditions, information on the following points: Pr1, Pr2, and Pr3 included in the search window may be directly inherited as information on the points in the PU. For example, position information (geometry data) and attribute information (attribute data) on Pr1, Pr2, and Pr3 may be inherited as position information (geometry data) and attribute information (attribute data) on Pc1, Pc2, and Pc3.

In this case, the inherited points: Pr1, Pr2, and Pr3 may be outside the PU range. For example, Pr1 may be outside the PU range. The method/device according to the embodiments may exclude inherited points that are outside the range from the predicted point cloud. The prediction points may be Pr2 and Pr3 in the reference frame.

The motion vector estimator according to the embodiments finds positions within the search window and PU block that is closest to the origin. For example, a point located at the bottom-left front corner may be selected.

Referring to FIG. 19, a vector may be established from the point located at the bottom-left front corner of the search window to a connected position indicated by an arrow. If the MVDCM conditions are satisfied, this vector may be applied to points included in the search window for motion vector compensation.

If the points after the compensation are included within a block that has the same position and size as a predictor (i.e., PU), the points are considered as the predicted point cloud for the PU.

For example, the motion vector estimator according to the embodiments may find a position 1900 in the search window closest to the origin and also find a position 1901 in the PU closest to the origin. The motion vector estimator may generate a vector connecting these two points. In this case, for the MVDCM, the motion vector compensation may be performed on the points within the search window based on the vector if the number of points is below a threshold. Each point (where the motion vector compensation is performed) predicted based on the vector is set as a predictor. When a predictor P is included within a block of the same size and/or position as the PU, the point (predictor P) is designated as predicted point cloud data.

Referring to FIG. 19, the reference point for positions may be the bottom-left front corner, but the reference point for positions may also be the distance 1902 between points located at the top, right, and back corners. In this way, a motion vector may be found using a pair of positions based on eight vertices capable of distinguishing the regions of the search window and PU. Among these vectors, a vector with the lowest RDO value may be selected as the motion vector.

The motion estimator according to embodiments may select two points belonging to the regions of the current frame and reference frame to perform prediction coding for the current frame and then generate a motion vector for motion compensation. Two points with the smallest distance may be selected as the two points that constitute the motion vector. The reason for this is that points that are closer in distance have similar positions and/or attributes and the residual caused by prediction coding is the smallest, thereby achieving efficient encoding and decoding. The methods/devices for transmitting and receiving point cloud data according to the embodiments may generate prediction data (geometry prediction data and/or attribute prediction data) on points included in the current frame, based on points and motion vectors included in the reference frame. The method/device according to the embodiments may generate and exchange residual values between current points and prediction data.

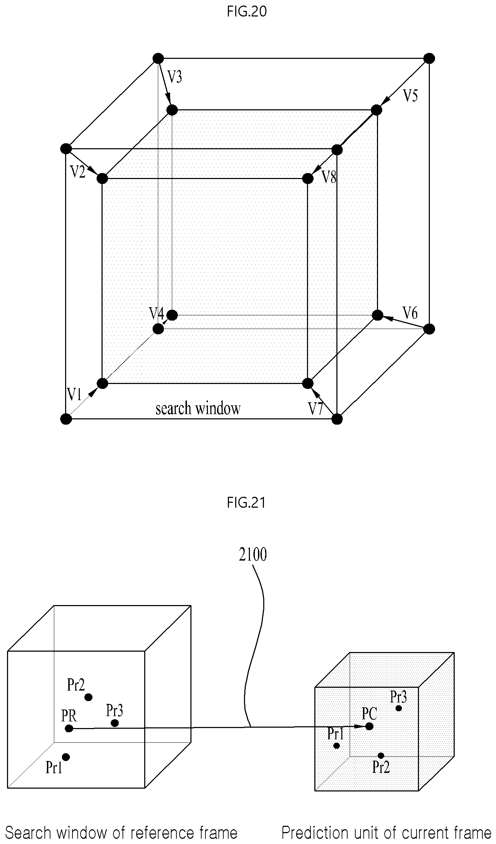

Referring to FIG. 20, vectors may be obtained by connecting 8 points in the search window to 8 points of the PU that are closest to the 8 points in the search window, and one of the vectors may be set to a motion vector to be applied for compensation. To determine the vector, the RDO values may be compared.

Herein, both the search window and PU are assumed to have the shape of cubes with the same search regions from all directions. However, if the values of each element in motion_window_size[3] are different, the PU may be in the shape of a cube while the search window may be in the shape of a rectangular prism.

These values may be predicted based on motion_window_size[3] and PU information. Specifically, if only a location where the selected vector is calculated is provided, the motion vector may be derived with no separate signaling.

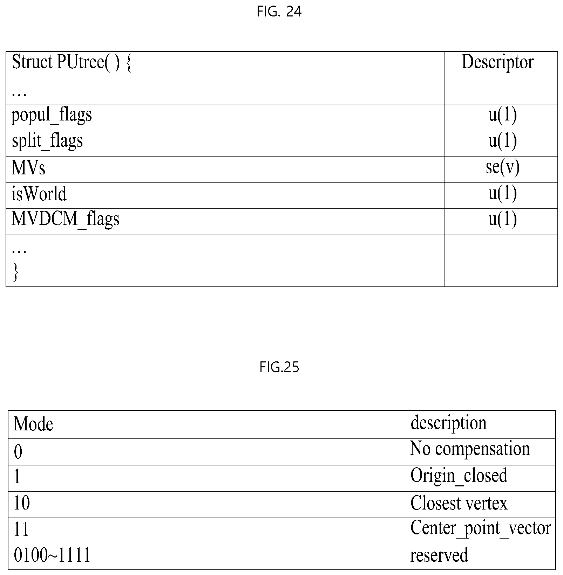

The difference between the representative value of points included in the search window of the reference frame and the representative value of points included in the PU of the current frame may be determined as the motion vector and then signaled. The representative value may be one of the following: arithmetic mean, geometric mean, maximum, minimum, or median. The motion vector information according to embodiments may correspond to the motion vector information (MVs) shown in FIG. 24.

For example, the motion estimator according to the embodiments may generate the following motion vectors: V1, V2, V3, V4, V5, V6, V7, and V8. Then, the motion estimator may select a motion vector with the most similar point (position/attribute) from among V1 to V8.

The reception method/device according to the embodiments may receive the bitstream in FIG. 22, parse motion vector-related information included in the bitstream, generate prediction data for the current frame, and then reconstruct point cloud data by adding received residual values.

Referring to FIG. 21, when the PU of the current frame is a target for the MVDCM or when both the search window of the reference frame and the PU of the current frame are targets for the MVDCM, the representative points in the search window and PU: PR (representative point of the reference frame) and PC (representative point of the current frame) may be calculated. Then, the motion vector may be calculated by motion vector = PR - PC (the difference between the representative points of the reference and current frames). The reception device may parse from the bitstream signaling information indicating that the motion vector is generated from the PU based on the MVDCM and receive the motion vector, which is obtained from the representative values.

For example, the method/device according to the embodiments may generate representative points for points included in the search window and PU regions. The representative values (representative points) may be selected based on the following criteria: the arithmetic mean, geometric mean, maximum value, minimum value, median, or any arbitrary value that provides statistically representative characteristics for the points. In this case, a motion vector 2100 may be generated based on the representative points.

A motion vector compensation method according to embodiments may perform motion compensation by: 1) directly inheriting information on points of the search window (FIG. 18); 2) selecting specific points within the search window and PU to generate a motion vectors (FIGS. 19 and 20); and/or 3) selecting representative points from the search window and PU to generate a motion vector (FIG. 21). In other words, one of the motion vector compensation methods according to embodiments may be applied, or two or more of the motion vector compensation methods according to embodiment may be applied in combination.

FIG. 22 illustrates a bitstream including point cloud data according to embodiments.

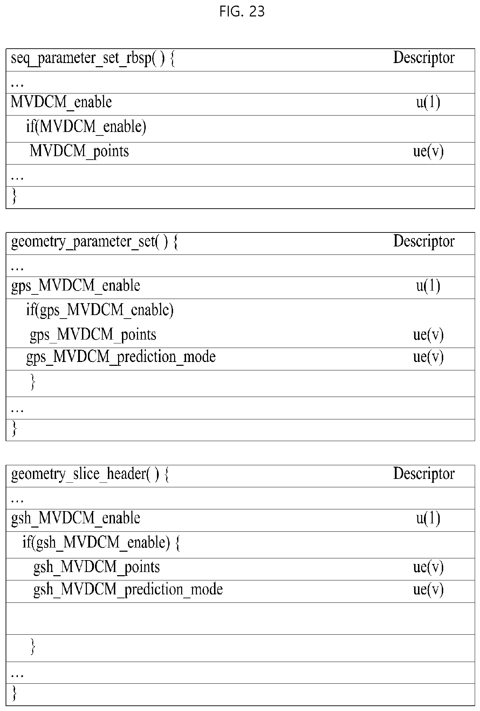

In the point cloud data transmission method/device according to the embodiments, the transmission device 10000, point cloud video encoder 10002, or transmitter 10003 in FIG. 1, the acquisition 20000/encoding 20001/transmission 20002 in FIG. 2, the encoder in FIG. 4, the transmission device in FIG. 12, the device in FIG. 14, and/or the processor (motion vector classifier) in FIG. 15 may encode point cloud data, generate parameters in FIGS. 23 to 25, and generate and transmit a bitstream including the point cloud data and parameters.

In the point cloud data reception method/device according to the embodiments, the reception device 10004, receiver 10005, or point cloud video decoder 10006 of FIG. 1, the transmission 20002/decoding 20003/rendering 20004 of FIG. 2, the decoder of FIGS. 10 and 11, the reception device of FIG. 13, the device of FIG. 14, and/or the processor (motion vector classifier) of FIG. 15 may receive a bitstream including point cloud data and parameters and reconstruct the point cloud data based on the parameters.

When the number of points included in a search target is less than or equal to a predetermined threshold, the method/device according to the embodiments may classify motion compensation methods and define corresponding information in a bitstream. According to these embodiments, the application of the MVDCM to a sequence parameter set (SPS) may be indicated, and all or part of MVDCM information may be provided along with information on the SPS, depending on the implementation method. Additionally, the information may also be transmitted in a geometry parameter set (GPS), slice header (which is referred to as a data unit), and/or an SEI message.

Furthermore, depending on the application and system, points may be defined at related or separate positions, thereby changing the scope of application, methods of application, and other factors. Moreover, if the syntax element defined below is applied not only to a current point cloud data stream but also to multiple point cloud data streams, it may be transmitted through higher parameter sets.

For incorporation/execution of embodiments, relevant information may be signaled. Hereinafter, parameters (referred to as metadata, signaling information, etc.) according to the embodiments may be generated for processes of the transmitter according to the embodiments, which will be described later. The parameters may then be provided to the receiver according to the embodiments for use in the reconstruction process. For example, the parameters according to the embodiments may be generated by a metadata processor (or metadata generator) of the transmitting device according to the embodiments and obtained by a metadata parser of the reception device according to the embodiments. Point cloud data may be encoded as shown in FIG. 22.

Each abbreviation is defined as follows: SPS: Sequence Parameter Set, GPS: Geometry Parameter Set, APS: Attribute Parameter Set, TPS: Tile Parameter Set, Geom: Geometry bitstream = geometry slice header+ geometry slice data, and Attr: Attribute bitstream = attribute brick header + attribute brick data.

A slice according to embodiments may be referred to as a data unit. For example, a geometry slice header may correspond to a geometry data unit header, and an attribute slice header may correspond to an attribute data unit. The data unit represents point cloud data (geometry data/attribute data), which corresponds to an encoding/decoding unit.

A bitstream according to embodiments may include one or more data units. The data unit may include a header containing information on the payload (geometry/attribute) of the data unit. A tile may be a unit containing slices (data units). The tile, slice, and data unit may be referenced by information on a position, width, height, depth, identifier (ID), etc. A single data unit may consist of one geometry and multiple attributes. For example, the reception device may receive the bitstream in FIG. 22 and identify slices contained within one tile. Additionally, the reception device may reconstruct geometry and attribute data for each slice.

FIG. 23 illustrates a sequence parameter set (SPS) and a geometry parameter set (GPS) according to embodiments.

Specifically, FIG. 23 shows the SPS and GPS included in the bitstream of FIG. 22.

The SPS according to embodiments may include the following information.

Simple profile (simple_profile_compliant): When simple_profile_compliant is set to 1, it indicates that a bitstream complies with the simple profile. When simple_profile _compliant is set to 0, it indicates that a bitstream follows a profile other than the simple profile.

Dense profile (dense_profile_compliant): When dense_profile_compliant is set to 1, it indicates that a bitstream complies with a dense profile. When dense_profile_compliant is set to 0, it indicates that a bitstream follows a profile other than the dense profile.

Predictive profile (predictive_profile_compliant): When predictive_profile_compliant is set to 1, it indicates that a bitstream complies with a predictive profile. When predictive_profile_compliant is set to 0, it indicates that a bitstream follows a profile other than the predictive profile.

Main profile (main_profile_compliant): When main_profile_compliant is set to 1, it indicates that a bitstream complies with a default profile. When main_profile _compliant is set to 0, it indicates that a bitstream follows a profile other than the default profile.

Slice reordering constraint (slice_reordering_constraint): When slice_reordering_constraint is set to 1, it indicates that a bitstream is sensitive to slice reordering and removal. When slice_reordering_constraint is set to 0, it indicates that a bitstream is not sensitive to the slice reordering and removal

Unique point position constraint (unique_point_positions_constraint): When unique_point_positions_constraint is set to 1, it indicates that all points of each coded point cloud frame have unique positions. When unique_point_positions_constraint is set to 0, it indicates that two or more points in the coded point cloud frame are allowed to have the same position.

For example, even if the points of each slice have unique positions, points in different slices of a frame may still match. In this case, unique_point_positions_constraint is set to 0.

Sequence parameter set ID (sps_seq_parameter set id): sps_seq_parameter_set_id identifies an SPS to be referenced by other data units (DU). For bitstreams conforming to this version of the document, sps_seq_parameter_set_id needs to be 0. Other values of sps_seq_parameter_set_id are reserved for future use by ISO/IEC.

Frame bit (frame_ctr_lsb_bits frame_ctr_lsb): frame_ctr_lsb_bits frame_ctr_lsb specifies the length of a syntax element at the bit level.

Slice tag (slice_tag_bits): slice_tag_bits indicates the length of a syntax element slice_tagat the bit level.

Sequence origin (seq_origin bits): seq_origin_bits indicates the bit length of a syntax element seq_origin_xyz[k].

seq_origin_xyz[k] and seq_origin _log2_scale together: seq_origin_xyz[k] and seq_origin_log2_scale together indicate a k-th origin component of the coding coordinate system. If not present, the values of seq_origin_xyz[k] and seq_origin_log2_scale are estimated as 0. The origin of the coding coordinate system is denoted by SeqOrigin[k].

Bounding box size (seq_bounding_box_size_bits): seq_bounding_box_size_bits indicates the length of a syntax element seq_bounding_box_size_minus1_xyz[k] at the bit level.

Bounding box size coordinate information (seq_bounding_box_size_minus1_xyz[k]): Plus 1 represents a k-th component of the width, height, and depth of the coded volume dimension in the output coordinate system.

seq_unit_numerator_minus1, seq_unit_denominator_minus1, and seq_unit_is_metres: seq_unit_numerator_minus1, seq_unit_denominator_minus1, and seq_unit_is_metres indicate the length of X, Y and Z unit vectors in the output coordinate system.

Global scale factor (seq_global_scale_factor_log2, seq_global_scale_refinement_bits, and seq_global_scale_refinement_factor): seq_global_scale_factor_log2, seq_global_scale_refinement_bits, and seq_global_scale_refinement_factor specify a fixed-point scale factor used to derive output point positions in the coding coordinate system.

Adjustment coefficient (seq_global_scale_refinement_factor): seq_global_scale_refinement_factor indicates fine adjustments for a global scale value. If not present, seq_global_scale_refinement_factor is estimated as 0.

The number of attributes (num_attributes): num_attributes indicates the number of attributes present in a coded point cloud.

Attribute component (attr_components_minus1 [attrId]): attr _components_minus 1 [attrId] indicates the number of components of an attribute.

Attribute instance identifier (attr_instance_id[attrId]): attr_instance_id[attrId] indicates an instance identifier for the attribute indicated by attrId.

The values of attr_instance_id are used to distinguish attributes with the same attribute label. For example, point clouds with multiple color attributes sampled from different viewpoints may be distinguished.

Attribute bit depth (attr_bitdepth_minus1 [attrId]): Plus 1 indicates the bit depth of each component of the attrId-th attribute.

In this case, attr_label_known[attrId], attr_label[attrId], and attr_label_oid[attrId] together identify the type of data conveyed by the attrId-th attribute. Specifically, attr_label_known[attrId]: attr_label_known[attrId] identifies the type of data conveyed by the attrId-th attribute, and attr_label_known[attrId] specifies whether the attribute is identified by the value of attr_label[attrId] or by the object identifier attr_label_oid[attrId].

The attribute types according to attr_label are defined as follows: 0: Colour, 1: Reflectance, 2: Opacity, 3: Frame index, 4: Frame number, 5: Material identifier, and 6: Normal vector.

Attribute property (attr_property_cnt): attr_property_cnt indicates the number of syntax structures attribute_property within an SPS for attributes.

Geometry axis order (geom_axis_order): geom_axis_order indicates the relationship between the X, Y, and Z axes of a coded point cloud and the S, T, and V axes.

bypass_stream_enabled: When bypass_stream_enabled is set to 1, it indicates that the bypass coding mode is allowed in reading a bitstream. When bypass_stream_enabled is set to 0, it indicates that the bypass coding mode is not used when reading a bitstream.

entropy_continuation_enabled: When entropy_continuation_enabled is set to 1, it indicates whether the entropy parsing of a DU depends on the final entropy parsing state of a preceding slice. If slice_reordering_constraint is set to 0 and if entropy_continuation_enabled is also set to 0, it corresponds to requirements for bitstream conformance.

sps_extension_present: When sps_extension_present is set to 0, it indicates that there is no syntax element sps_extension_data in an SPS syntax structure

Additionally, depending on direct mode information (MVDCM_enable), the SPS may further include information on the number of direct points (MVDCM_points).

The reception device according to the embodiments may efficiently reconstruct point cloud data based on the direct mode information.

The GPS according to embodiments may include the following information.

Geometry parameter set ID (gps_geom_parameter set id): gps_geom_parameter_set_id indicates a GPS to be reference by other DUs.

Sequence parameter set ID (gps_seq_parameter_set_id): gps_seq_parameter_set_id indicates the value of active SPS sps_seq_parameter_set_id.

Slice geometry origin scale presence (slice_geom_origin_scale_present): slice_geom_origin_scale_present indicates whether slice_geom_origin_log2_scale is present in a GDU header. When slice_geom_origin_scale_present is set to 0, it indicates that the slice origin scale is equal to gps_slice_geom_origin_log2_scale.

Geometry origin scale (gps_geom_origin_log2_scale): When slice_geom_origin_scale_present is set to 0, it indicates a scale factor for deriving the slice origin from slice_origin_xyz.

When duplicate_points_enabled is set to 0, it specifies that all output points in each slice referenced by the current GPS have unique positions within the slice. When duplicate_points_enabled is set to 1, it indicates that two or more output points in each slices referenced by the current GPS are allowed to have the same position within the slice.

Duplication point status (duplicate_points_enabled): When duplicate_points_enabled is set to 0, it indicates that encoding the same point position multiple times within a single slice is allowed.

Geometry tree type (geom_tree_type): When geom_tree_type is set to 0, it indicates that slice point positions are encoded based on an occupancy tree (7.3.3.4). When geom_tree_type is set to 1, it indicates that slice point positions are encoded based on a predictive tree (7.3.3.11).

Octree point list presence (occtree_point_cnt_list_present): occtree_point_cnt_list_present indicates whether the point count list for each occupancy tree level is present in a GDU header. If not present, occtree_point_cnt_list_present is estimated as 0.

Octree direct coding mode (occtree_direct_coding_mode): When occtree_direct_coding_mode is greater than 0, it indicates that point positions are capable of being encoded by appropriate direct nodes of an occupancy tree. When occtree_direct_coding_mode is set to 0, it indicates that direct nodes should not exist in the occupancy tree.

Octree direct joint coding status (occtree_directJoint_coding_enabled): When occtree_directjoint_coding_enabled is set to 1, it indicates that, when two points are coded by direct nodes, the positions should be jointly coded in part on the assumption of a specific order of points.

Octree coded axis list presence (occtree_coded_axis_list_present): When occtree_coded_axis_list_present is set to 1, it indicates that a GDU header contains a syntax element occtree_coded_axis used to derive node sizes for each occupancy tree level. When occtree_coded_axis_list_present is set to 0, it indicates that the syntax element occtree_coded_axis is not present in the GDU header and the occupancy tree represents a third-order volume.

Octree neighbor window (occtree_neigh_window_log2_minus1): Plus 1 specifies the number of occupancy tree nodes that form a window including the surroundings of the current node. In this case, it is not allowed to use nodes in a process associated with the corresponding nodes. When occtree_neigh_window_log2_minus1 is set to 0, it indicates that only sibling nodes are available at the current node.

Octree adjacent child status (occtree_adjacent_child_enabled): When occtree_adjacent_child_enabled is set to 1, it indicates whether adjacent children of a neighboring occupancy tree node are used for bit occupancy conditioning. If not present, occtree_adjacent_child_enabled is estimated as 0.

In this case, occtree_intra_pred_max_nodesize_log2 indicates the size of an occupancy tree node suitable for occupancy for intra prediction. If not present, occtree_intra_pred_max_nodesize_log2 is estimated as 0.

Octree bitwise coding (occtree_bitwise_coding): When occtree_bitwise_coding is set to 1, it indicates that the occupancy of occupancy tree nodes is encoded using a syntax element occupancy_bit based on bit context modeling. When the occtree_bitwise_coding is set to 0, it indicates that the occupancy of occupancy tree nodes is encoded using a syntax element occupancy_byte, which is pre-encoded.

When occtree_planar_enabled is set to 1, it indicates that a planar coding mode is enabled. When occtree_planar_enabled is set to 0, it indicates that the planar coding mode is not enabled. If not present, occtree_planar_enabled is estimated as 0.

Octree planar threshold (occtree_planar_threshold[i]): occtree_planar_threshold[i] indicates an activation threshold for the planar coding mode in an i-th direction, which is expected to be efficient for the planar coding mode.

Octree direct mode (occtree_direct_node_rate_minus1): occtree_direct_node_rate_minus1 indicates that only occtree_direct_node_rate_minus1 + 1 among all 32 suitable direct nodes are to be coded.

Geometry angular status (geom_angular_enabled): geom_angular_enabled indicates whether geometry is to be encoded using the priorities of beam sets that are positioned at the angular origin and rotate around the V-axis.

Slice angular origin presence (slice_angular_origin_present): slice_angular_origin_present indicates whether the angular origin related to slices is present in a GDU header. When slice_angular_origin_present is set to 0, it indicates that the angular origin is gps_angular_origin_xyz. If not present, slice_angular_origin_present is estimated as 0.

Angular origin (gps_angular_origin_bits_minus1): gps_angular_origin_bits_minus1 indicates the length of each syntax element gps_angular_origin_xyz[k] at the bit level.

gps_angular_origin_xyz[k]: gps_angular_origin_xyz[k] indicates a k-th positional component (x, y, z) of the beam origin. If not present, gps_angular_origin_xyz[k] is estimated as 0.

Angular azimuth and radius scale (ptree_angular_azimuth_pi_bits_minus11 and ptree_angular_radius_scale_log2): ptree_angular_azimuth_pi_bits_minus11 and ptree_angular_radius_scale_log2 indicates elements used to adjust the size of encoded positions using angular coordinate systems during conversion to Cartesian coordinates.

Angular azimuth step (ptree_angular_azimuth_step_minus1): Plus 1 indicates a unit change in azimuth angle. Differential prediction residuals used in angular predictive tree coding may be partially represented as multiples of ptree_angular_azimuth_step_minus1 plus 1. The value of ptree_angular_azimuth_step_minus1 is smaller than $(1 << (\text{ptree\_angular\_azimuth\_pi\_bits\_minus11} + 12))$.

The number of beams (num_beams_minus1): Plus 1 indicates the number of beams used in an angular coding mode.

Beam elevation (beam_elevation_init and beam_elevation_diff[i]): beam_elevation_init and beam_elevation_diff[i] indicate the slope of a beam elevation on a plane defined by first and second encoded axes. The elevation gradient for each beam, specified as the BeamElev array, is a binary fixed-point value with 18 fractional bits.

Beam offset (beam_voffset_init and beam_voffset_diff[i]): beam_voffset_init and beam_voffset_diff[i] indicate adjustment of an i-th beam position along the V-axis relative to Geom AngularOrigin[2] .

Beam samples (beam_samples_per_turn_init_minus1 and beam_samples_per_tum_diff[i]): beam_samples_per_turn_init_minus1 and beam_samples_per_turn_diff[i] indicate the number of samples generated by an i-th beam of the rotation detection system, which is positioned at the origin and used for process in the angular coding mode.

Octree planner buffer status (occtree_planar_buffer_disabled): When occtree_planar_buffer_disabled is set to 1, it indicates that no buffer is used to track the nearest node during a process of coding planar mode flags and planar positions in the planar mode. When occtree_planar_buffer_disabled is set to 0, it indicates that a buffer is used to track the nearest node. If not present, occtree_planar_buffer_disabled is estimated as !occtree_planar_enabled.

Geometry scaling status (geom_scaling_enabled): When geom_scaling_enabled is set to 1, it indicates that a scaling process for geometry positions is invoked during the geometry decoding process. When geom scaling_enabled is set to 0, it indicates that no scaling is required for geometry positions. If not present, geom_scaling_enabled is estimated as 0.

Geometry initial quantization parameter (QP) (geom initial_qp): geom initial_qp indicates an initial QP for geometry positions.

Geometry QP multiplier (geom_qp_multiplier_log2): geom_qp_multiplier_log2 indicates a scale factor to be applied to geometry QP values before deriving the scaling step size and shift for geometry scaling. The value of geom_qp_multiplier_log2 ranges from 0 to 3. For x = 0, ... 3, geom_qp_multiplier_log2 equal to x indicates that a QP value (where 8 >> x) is capable of being specified whenever the geometry scaling step size doubles.

QP period (ptree_qp_period_log2): ptree_qp_period_log2 indicates a basic frequency for signaling QP offsets for predictive tree nodes.

Octree direct node QP offset (occtree_direct node_qp_offset): occtree_direct_node_qp_offset indicates an offset relative to sliceQp for scaling point positions coded by the direct coding mode. If not present, the value of occtree_direct_node_qp_offset is estimated as 0.

The GPS according to the embodiments may further include MVDCM structure information. Depending on the MVDCM information (gps_MVDCM_enable), the GPS may further include point information (gps _MVDCM_points) and prediction mode information (gps_MVDCM_prediction_mode).

FIG. 24 illustrates information on a PU tree structure according to embodiments.

Struct PUtree() according to embodiments is a structure included in geom_slice_data within the bitstream shown in FIG. 22. Struct PUtree() may convey information on inter prediction.

Inter prediction may be implemented and verified on reference software (SW).

The PU structure according to embodiments may further include direct flag information (MVDCM_flags).

Direct coding mode status (MVDCM_enable): MVDCM_enable is a flag to indicate whether the MVDCM is applicable, which may be declared in an SPS to signal the applicability of the MVDCM at the content level. For example, when MVDCM_enable is set to TRUE, it indicates that the MVDCM is applicable. When MVDCM_enable is set to FALSE, it indicates that the MVDCM is not applied.

Direct coding mode points (MVDCM_points): If MVDCM_enable is set to TRUE, the number of points that serve as the criteria for applying the MVDCM may be provided in signaling information. If MVDCM_enable is set to TRUE in the SPS but if MVDCM_points is not present, the corresponding information may be signaled in geometry_slice_header of the GPS.

GPS direct coding mode status (gps_MVDCM_enable): gps_MVDCM_enable is a flag to indicate whether the MVDCM is applicable, which may be declared in a GPS to signal the applicability of the MVDCM at the fame level. For example, when gps_MVDCM_enable is set to TRUE, it indicates that the MVDCM is applicable. When gps_MVDCM_enable is set to FALSE, it indicates that the MVDCM is not applied.

If the SPS has a flag indicating the applicability of the MVDCM, the GPS may also convey the corresponding information through gps_MVDCM_enable as signaling information. If SPS has no flag, the MVDCM applicability may be signaled on a geometry basis at the GPS level.

GPS direct coding mode points (gps_MVDCM_points): If MVDCM_enable is set to TRUE, the number of points that serve as the criteria for applying the MVDCM may be signaled together. If MVDCM_enable in the SPS is set to TRUE, but if MVDCM_points is not present, the corresponding information may be signaled in geometry_slice_header of the GPS.

GPS direct coding mode prediction mode (gps_MVDCM_prediction_mode): When the PU is a target for the MVDCM, information on a mode used for prediction may be signaled differently at the frame level. The same mode may be applied to all PUs included in the same frame.

FIG. 25 illustrates prediction modes according to embodiments.

Specifically, FIG. 25 shows the prediction modes shown in FIG. 22.

Prediction modes according to embodiments are defined as follows: no compensation (0000 of FIG. 18) where search window points from the reference frame are directly inherited; origin_closed (0001 of FIG. 19) where the difference between the origin point and the closest vertex among the vertices of a cube or cuboid representing the search window and PU regions is used as a motion vector; closest _vertex (0010 of FIG. 20) where a vector with the smallest RDO among the vectors between 8 pairs of vertices in the search window and PU regions is used as a motion vector; and center_point_vector (0011 of FIG. 21) where representative values are calculated from the search window and PU, respectively, and the vector difference between the representative values is used as the motion vector. These modes may be added or removed as needed if the MVDCM conditions are satisfied.

gsh_MVDCM_enable: gsh_MVDCM_enable is a flag to indicate whether the MVDCM is applicable, which may be declared in a geometry slice header to signal the applicability of the MVDCM at the slice level. If there is a flag indicating the applicability of the MVDCM in the SPS or GPS, gsh_MVDCM_enable may inherit corresponding information and be signaled.

gsh_MVDCM_points: If gsh_MVDCM_enable is set to TRUE, the number of points that serve as the criteria for applying the MVDCM may be signaled together. If MVDCM _enable in the SPS or gps_MVDCM_enable in the GPS is set to TRUE, but if MVDCM_points or gps_MVDCM_points is not present, the corresponding information may be signaled in geometry _slice _header of the GPS.

gsh_MVDCM_prediction_mode: When the PU is a target for the MVDCM, information on a mode used for prediction may be signaled differently at the slice level. The same mode may be applied to all PUs included in the same slice.

The prediction modes are defined as follows: no compensation where search window points from the reference frame are directly inherited; origin_closed where the difference between the origin point and the closest vertex among the vertices of a cube or cuboid representing the search window and PU regions is used as a motion vector; closest_vertex where a vector with the smallest RDO among the vectors between 8 pairs of vertices in the search window and PU regions is used as a motion vector; and center_point_vector where representative values are calculated from the search window and PU, respectively, and the vector difference between the representative values is used as the motion vector. These modes may be added or removed as needed if the MVDCM conditions are satisfied.

Flag (popul_flags): popul_flags is a flag indicating the presence or absence of points within a PU.

Split flag (split _flags): split _flags is a flag indicating whether a corresponding PU needs to be split into smaller units.

Motion vector (MVs): MVs indicates motion vectors applied to a PU.

Flag (isWorld): isWorld is a flag indicating whether a point cloud after global motion compensation needs to be used as a reference.

Flag (MVDCM_flags): MVDCM_flags may be added to indicate whether the MVDCM is applied to a corresponding PU. If MVDCM_flags is set to TRUE, it indicates that the MVDCM is applied to the PU. If MVDCM _flags is set to FALSE, it indicates that the MVDCM is not applied to the PU.

FIG. 26 illustrates the point cloud data transmission method according to the embodiments.

In the point cloud data transmission method/device according to the embodiments, the transmission device 10000, point cloud video encoder 10002, or transmitter 10003 in FIG. 1, the acquisition 20000/encoding 20001/transmission 20002 in FIG. 2, the encoder in FIG. 4, the transmission device in FIG. 12, the device in FIG. 14, and/or the processor (motion vector classifier) in FIG. 15 may operate according to the flowchart shown in FIG. 26.

The structure of the transmitting device according to the embodiments may correspond to the structure of a point cloud encoder according to embodiments. Hereinafter, the point cloud encoder for general point cloud compression processing will be described.

The transmitter receives point cloud data, separates the point cloud data into point position (geometry) and point attribute values, and performs coordinate transformation to prepare for coding. The transmitter refines the data by performing quantization and voxelization with the transformed coordinate values and performs global motion estimation and compensation.

After completing the global motion estimation, the transmitter determines the regions of a PU and a search window, which are units for local motion vector estimation, and checks the MVDCM_enable information, which is a flag defined in an SPS. If MVDCM_enable is TRUE, the transmitter counts the number of points in the region of each PU and search window. If the number of points in each region is less than MVDCM_points, the transmitter does not perform motion vector estimation. Alternatively, the transmitter extracts a separate motion vector and transmits a flag indicating that the corresponding PU is a target for the MVDCM. In other words, instead of performing the motion vector estimation, the transmitter extracts the motion vector based on information on the positions of the search window and PU to select the motion vector of the PU, which is subject to the MVDCM. The transmitter applies the extracted motion vector, performs intra prediction along with nodes where no inter prediction is performed, and then performs geometry coding for all positions/PUs/nodes included in one frame.

In 2600 of the transmission method according to the embodiments, point cloud data may be acquired, quantized, and voxelized.

In 2601 of the transmission method according to the embodiments, global motion estimation and compensation may be applied to the quantized and voxelized point cloud data. That is, the point cloud data may be estimated and compensated globally.

In 2602 of the transmission method according to the embodiments, the point cloud data may be estimated and compensated locally. The PU of the current frame and the search window of the reference frame, which correspond to a local region, may be determined.

In 2603 of the transmission method according to the embodiments, if a direct coding mode is activated, the number of points in an area where local estimation/compensation is performed may be counted. For example, the number of points included in the search window may be counted. Additionally, the number of points included in the PU may be counted.

In 2604 of the transmission method according to the embodiments, it may be determined whether the number of points included in each of the PU and search window is smaller than the number of points for the direct coding mode. If the number of points included in each of the PU and search window is below a threshold, a motion vector may be derived.

In 2605 of the transmission method according to the embodiments, motion vector compensation may be performed by applying the direct coding mode to the PU based on the generated motion vector.

In 2606 of the transmission method according to the embodiments, if the direct coding mode is disabled, the motion vector estimation may be performed. Additionally, if the direct coding mode is activated but if the number of points is greater than the threshold, the motion vector estimation may be performed. The motion vector may be estimated, and then motion vector compensation may be performed based on the estimated motion vector. Thereafter, the motion vector may be encoded.

If the number of points is small, the approaches described in 2603 to 2605 may offer a fast and accurate solution.

In the transmission method according to the embodiments, inter prediction may be performed after the motion compensation, which corresponds to intra prediction.

In the transmission method according to the embodiments, the encoded geometry may be reconstructed, and attribute coding may be performed. The attribute coding may be performed based on an intra-frame approach.

In the transmission method according to the embodiments, a bitstream including the encoded geometry/attributes may be generated. In the transmission method according to the embodiments, a bitstream including encoding-related parameters may be generated (see FIG. 22).

In the embodiments, a separate processing method may be applied if specific conditions are met, rather than using general geometry coding or attribute coding. In particular, compared to methods used for intra prediction, there may be certain intra-coding predictions when the correlation with neighboring nodes is very low. However, the embodiments relate to methods of omitting motion vector estimation during inter prediction if the number of points included in a PU is very low. Alternatively, the embodiments relate to methods of applying other approaches. The embodiments may achieve efficient compression/reconstruction between multiple frames.

Furthermore, when inter-screen prediction is performed at the PU level, motion vector estimation may be performed. Compared to methods of applying the motion vector estimation in common without considering the state of the PU, the embodiments may adaptively provide the motion vector estimation for each mode depending on the number of points included in the PU. If the number of points is small, delays may increase due to search patterns, and thus, additional modes are required.

FIG. 27 illustrates the point cloud data reception method according to the embodiments.

In the point cloud data transmission method/device according to the embodiments, the reception device 10004, receiver 10005, or point cloud video decoder 10006 in FIG. 1, the transmission 20002/decoding 20003/rendering 20004 of FIG. 2, the decoder of FIGS. 10 and 11, the reception device of FIG. 13, the device of FIG. 14, and/or the processor (motion vector classifier) of FIG. 15 may operate according to the flowchart shown in FIG. 27

The structure of the reception device according to the embodiments may correspond to the structure of a point cloud decoder according to embodiments. Hereinafter, the point cloud decoder for general point cloud compression processing will be described.

The receiver performs entropy decoding, dequantization, and inverse transformation on geometry and attribute bitstreams transmitted from the transmitter. Then, if global motion compensation is allowed, the receiver performs the global motion estimation on the slice/frame level and defines the regions of a PU and a search window. If MVDCM _enable, which is a flag received in the SPS, is set to TRUE, the receiver checks whether MVDCM_flag of the corresponding PU is also set to TRUE. If MVDCM _flag is set to TRUE, the receiver determines PU_tree.MVs, which is the motion vector of the PU, based on information on the positions of the search window and PU. Alternatively, if the receiver possesses a motion vector received from the encoder, the receiver decodes the motion vector and performs motion compensation to update a point cloud. Otherwise, the receiver checks PU_tree.split_flags to determine whether the PU corresponds to a split target. If PU_tree.split_flags is set to FALSE, the receiver decodes PU_tree.MVs and performs compensation. If the compensated points are included in the range of the PU, the receiver updates the corresponding point cloud. Once geometry reconstruction is completed, the receiver inversely transforms color information and transmits the contents of the reconstructed point cloud to the renderer. The structure of the reception device according to the embodiments may correspond to the structure of the point cloud decoder according to the embodiments. Hereinafter, the point cloud decoder for general point cloud compression processing will be described in detail.

Each step of the reception method according to the embodiments may correspond to the inverse of each step of the related transmission method.

In 2700 of the reception method according to the embodiments, a bitstream including encoded point cloud data and parameters may be received.

In 2701 of the reception method according to the embodiments, the point cloud data may be decoded based on entropy decoding.

In 2702 of the reception method according to the embodiments, the coordinate system may be transformed in reverse, which corresponds to the reverse process of the transmission,

In 2703 of the reception method according to the embodiments, global motion compensation may be performed.

In 2704 of the reception method according to the embodiments, local motion compensation may be performed. The PU of the current frame and the search window of the reference frame may be determined for the local motion compensation.

In 2705 of the reception method according to the embodiments, a direct coding mode is activated. When a flag for the direct coding mode for the PU is set to TRUE, motion vector estimation for the direct coding mode may be performed.

In 2706 of the reception method according to the embodiments, the motion compensation may be performed based on motion vectors.

In 2707 of the reception method according to the embodiments, if the direct coding mode is deactivated, or if the flag for the direct coding mode for the PU is set to FALSE and a flag for the PU tree split is also set to FALSE, it is possible to decode PU motion vectors rather than direct coding motion vectors.

In the reception method according to the embodiments, if the node range falls within the compensated point cloud region, the point cloud data may be updated and reconstructed. Attribute data may also be decoded.

In the reception method according to the embodiments, if the mode is the MVDCM and there is a motion vector (MV) received from the encoder, the MV may be directly applied after decoding. If there are no MVs, the decoder may predict and apply an MV.

FIG. 28 illustrates the point cloud data transmission method according to the embodiments.

S2800: The point cloud data transmission method according to the embodiments may include encoding point cloud data.

The encoding operation according to embodiments may include: the operations performed by the transmission device 10000 or point cloud video encoder 10002 in FIG. 1; the encoding in FIG. 2; the operations performed by the encoder in FIG. 4; the operations performed by the transmission device in FIG. 12; the operations performed by the XR device 1430 in FIG. 14; the motion compensation (inter prediction) in FIG. 15; the bitstream generation in FIG. 22; and/or the transmission operation in FIG. 26.

S2801: The point cloud data transmission method according to the embodiments may further include transmitting a bitstream including the point cloud data.

The transmission operation according to embodiments may include: the operations performed by the transmitter 10003 in FIG. 1; the transmission in FIG. 2; the transmission of the geometry/attribute bitstream in FIG. 4; the bitstream transmission in FIG. 12; the transmission after inter/intra prediction in FIG. 15; the bitstream transmission in FIG. 22; and/or the transmission of the encoded bitstream in FIG. 26.

FIG. 29 illustrates the point cloud data reception method according to the embodiments.

S2900: The point cloud data reception method according to the embodiments may include receiving a bitstream including point cloud data

The reception operation according to embodiments may include: the operations performed by the reception device 10004 and receiver 10005 in FIG. 1; the reception in FIG. 2; the bitstream reception in FIGS. 10 and 11; and/or the bitstream reception in FIG. 13.

S2901: The point cloud data reception method according to the embodiments may further include decoding the point cloud data.

The decoding operation according to embodiments may include: the operations performed by the point cloud video decoder 10006 in FIG. 1; the decoding 20003 in FIG. 2; the operations performed by the decoder in FIGS. 10 and 11; the geometry/attribute decoding in FIG. 13; the prediction based on motion compensation in FIG. 15; the bitstream decoding based on parameters in FIG. 22; and/or the reception operation in FIG. 27.

Referring to FIG. 1, the point cloud data transmission method may include: encoding point cloud data; and transmitting a bitstream including the point cloud data.

Referring to FIG. 15, regarding motion compensation based on the direct coding mode (MVDCM), encoding the point cloud data may include encoding point cloud data included in a first frame based on point cloud data included in a second frame.

The first frame may be a current frame including points to be encoded currently, and the second frame may be a reference frame used to generate prediction data for the points within the first frame. The reference frame may be a frame compressed/reconstructed before the current frame or a frame compressed/reconstructed after the current frame.

Referring to FIGS. 16 and 17, regarding the motion compensation based on the direct coding mode (MVDCM), the number of points may be counted, and a mode may be determined based on the count information. For example, a PU may be generated for the first frame, and a search window may be generated for the second frame. Encoding the point cloud data may include encoding the PU based on the number of one or more points included in at least one of the PU or the search window

Referring to FIG. 18, regarding the motion compensation based on the direct coding mode (MVDCM), the search window may be inherited, and points outside the region thereof may be excluded. Points included in the search window may be encoded based on the number of one or more points included in the PU. In this case, if a point included in the search window is outside the range of the PU, the point may be excluded.

Referring to FIG. 19, regarding the motion compensation based on the direct coding mode (MVDCM), an MV may be related to the bottom, left, or front of a region (box). For example, an MV may be generated based on a point located at the bottom, left, and front of the search window and a point located at the bottom, left, and front of the PU.

Referring to FIG. 20, regarding the motion compensation based on the direct coding mode (MVDCM). A specific MV may be selected from among eight MV candidates based on an RDO. For example, the MVs may be generated based on points on the vertices of the search window and points on the vertices of the PU.

Referring to FIG. 21, regarding the motion compensation based on the direct coding mode (MVDCM), an MV may be generated as a representative value. For example, MVs may be generated based on at least one of the average, maximum, minimum, or median of the points included in the search window and at least one of the average, maximum, minimum, or median of the points included in the PU.

The transmission method according to the embodiments may be performed by a transmission device, encoder, motion estimator, etc.

The point cloud data reception method according to the embodiments may be related to the transmission method or the reverse thereof. For example, the point cloud data reception method may include: receiving a bitstream including point cloud data; and decoding the point cloud data.

Decoding the point cloud data may include decoding point cloud data included in a first frame based on point cloud data included in a second frame.

In addition, a PU may be generated for the first frame, and a search window may be generated for the second frame. Decoding the point cloud data may include decoding the PU based on the number of one or more points included in at least one of the PU or the search window.

Decoding according to the embodiments refers to a process of reconstructing points (geometry/attribute) based on inter-frame prediction.

According to embodiments, points included in the search window may be decoded based on the number of one or more points included in the PU. In this case, if a point included in the search window is outside the range of the PU, the point may be excluded.

An MV may be generated based on a point located at the bottom, left, and front of the search window and a point located at the bottom, left, and front of the PU. Alternatively, the points may be reconstructed based on information on the MV included in the bitstream.

An MV may be generated based on a point on a vertex of the search window and a point on a vertex of the PU. Alternatively, the points may be reconstructed based on information on the MV included in the bitstream.

Accordingly, the method/device according to the embodiments may use various modes depending on the number of points included in a PU, which is a prediction unit, when making inter-screen prediction of point cloud content. For example, if the PU includes a very small number of points, the motion vector estimation that requires a large search process, may not be applied. An MV may be predicted based on the relationship between the search window and PU, and, relevant signaling information may be generated and transmitted. The encoder may perform early decoding depending on the state of the PU and search window, thereby reducing the time required for encoding. The decoder may not need to check whether a point is within the PU range after applying the decoded motion vector, thereby reducing the time required for decoding.

Embodiments have been described from the method and/or device perspective, and descriptions of methods and devices may be applied so as to complement each other.

Although the accompanying drawings have been described separately for simplicity, it is possible to design new embodiments by merging the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications may be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this specification, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if' and "when" are not limited to an optional case and are intended to be interpreted, when a specific condition is satisfied, to perform the related operation or interpret the related definition according to the specific condition.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or a combination thereof. The firmware, software, and/or a combination thereof may be stored in the processor or the memory.

The operations according to the above-described embodiments may be performed by the transmission device and/or the reception device according to the embodiments. The transmission/reception device includes a transmitter/receiver configured to transmit and receive media data, a memory configured to store instructions (program code, algorithms, flowcharts and/or data) for a process according to embodiments, and a processor configured to control operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

MODE FOR DISCLOSURE

As described above, related contents have been described in the best mode for carrying out the embodiments.

INDUSTRIAL APPLICABILITY

As described above, the embodiments may be fully or partially applied to the point cloud data transmission/reception device and system.

It will be apparent to those skilled in the art that various changes or modifications can be made to the embodiments within the scope of the embodiments.

Thus, it is intended that the embodiments cover the modifications and variations of this disclosure provided they come within the scope of the appended claims and their equivalents.

**Claims**

1. A method of transmitting point cloud data, the method comprising:

   encoding the point cloud data; and
   transmitting a bitstream including the point cloud data.

2. The method of claim 1, wherein encoding the point cloud data comprises encoding point cloud data included in a first frame based on point cloud data included in a second frame.

3. The method of claim 2, wherein a prediction unit is generated for the first frame,

   wherein a search window is generated for the second frame, and
   wherein encoding the point cloud data comprises encoding the prediction unit based on a number of one or more points included in at least one of the prediction unit or the search window.

4. The method of claim 3, wherein points included in the search window are encoded based on a number of one or more points included in the prediction unit, and
   wherein based on that a point included in the search window is outside a range of the prediction unit, the point is excluded.

5. The method of claim 3, wherein a motion vector is generated based on a point located at a bottom, left, and front of the search window and a point located at a bottom, left, and front of the prediction unit.

6. The method of claim 3, wherein a motion vector is generated based on a point on a vertex of the search window and a point on a vertex of the prediction unit.

7. The method of claim 3, wherein a motion vector is generated based on at least one of an average, a maximum, a minimum, or a median of points included in the search window and at least one of an average, a maximum, a minimum, or a median of points included in the prediction unit.

8. A device configured to transmit point cloud data, the device comprising:

   an encoder configured to encode the point cloud data; and
   a transmitter configured to transmit a bitstream including the point cloud data.

9. A method of receiving point cloud data, the method comprising:

   receiving a bitstream including the point cloud data; and
   decoding the point cloud data.

10. The method of claim 9, wherein decoding the point cloud data comprises decoding point cloud data included in a first frame based on point cloud data included in a second frame.

11. The method of claim 10, wherein a prediction unit is generated for the first frame,

    wherein a search window is generated for the second frame, and
    wherein decoding the point cloud data comprises decoding the prediction unit based on a number of one or more points included in at least one of the prediction unit or the search window.

12. The method of claim 11, wherein points included in the search window are decoded based on a number of one or more points included in the prediction unit, and
    wherein based on that a point included in the search window is outside a range of the prediction unit, the point is excluded.

13. The method of claim 11, wherein a motion vector is generated based on a point located at a bottom, left, and front of the search window and a point located at a bottom, left, and front of the prediction unit, or
    wherein the bitstream includes information on the motion vector.

**14.** The method of claim 11, wherein a motion vector is generated based on a point on a vertex of the search window and a point on a vertex of the prediction unit, or
wherein the bitstream includes information on the motion vector.

**15.** A device configured to receive point cloud data, the device comprising:

a receiver configured to receive a bitstream including the point cloud data; and
a decoder configured to decode the point cloud data.

FIG. 1

FIG. 2

FIG. 3

FIG. 4

FIG. 5

FIG. 6

FIG. 7

$$1 + 2 + 4 + 8 = 15$$

FIG.8

Level of details

FIG.9

| | |
|---|---|
| Original order | P0, P1, P2, P3, P4, P5, P6, P7, P8, P9 |
| LOD-based order | P0, P5, P4, P2 \| P1, P6, P3 \| P9, P8, P7 |

LOD0

LOD1

LOD2

FIG.10

FIG.11

FIG.12

```
                              ┌──────────────────────┐
                   12000 ─────│    Data input unit    │──── 12007
                              └──────────────────────┘
      Position values of points    │           Attribute values of points
                                    │  Set value, etc.
   ┌──────────────┐      ┌──────────────┐      ┌──────────────┐
 12001│ Quantization  │── ─│  Metadata   │──    │ Color transform│─ 12008
      │  processor    │    │  processor   │      │   processor   │
   └──────────────┘      └──────────────┘      └──────────────┘
          │                                            │
   ┌──────────────┐                           ┌──────────────┐
 12002│ Voxelization │── ──── ── ── ── ── ──│ Attribute transform│─ 12009
      │  processor    │                       │   processor   │
   └──────────────┘                           └──────────────┘
          │                                            │
   ┌──────────────┐                           ┌──────────────────┐
 12003│Octree occupancy│─ ─── ── ── ── ── ──│Predicting/lifting/RAHT│─ 12010
      │ code generator │                     │ transform processor │
   └──────────────┘                           └──────────────────┘
          │                                            │
   ┌──────────────┐                           ┌──────────────┐
 12004│ Surface model │─ ─── ── ── ── ── ──│ Arithmetic coder │─ 12011
      │  processor    │                       └──────────────┘
   └──────────────┘
          │
   ┌──────────────┐
 12005│ Intra/inter-coding│─ ─── ──
      │  processor    │
   └──────────────┘
          │
   ┌──────────────┐
 12006│ Arithmetic coder │─ ─── ──
   └──────────────┘
```

Sharing reconstructed
position values

```
                   ┌──────────────────┐
          12012 ───│   Transmission    │
                   │    processor      │
                   └──────────────────┘
                          │
                     Transmission
                          ↓
```

FIG.13

```
                              ┌──────────────────┐
        13000 ───             │     Receiver     │
                              └──────────────────┘
                                       │
                                       ▼
        13001 ───             ┌──────────────────┐        13006
                              │ Reception processor │
                              └──────────────────┘
     Geometry bitstream          │              Attribute bitstream

              Set value, etc.│
   13002 ─ ┌─────────────────┐  ┌──────────┐  ┌─────────────────┐ ─ 13007
          │ Arithmetic decoder│◄─┤ Metadata │  │ Arithmetic decoder│
          └─────────────────┘   │  parser  │  └─────────────────┘
                                └──────────┘
          ┌─────────────────┐              ┌─────────────────┐
   13003 ─│ Occupancy code-based│◄ - - - - >│ Inverse quantization│─ 13008
          │octree reconstruction│          │    processor     │
          │    processor     │             └─────────────────┘
          └─────────────────┘
          ┌─────────────────┐              ┌─────────────────┐
   13004 ─│Surface model processor│◄- - - ->│Predicting/lifting/RAHT│─ 13009
          │(triangle reconstruction,│        │ inverse transform │
          │up-sampling, voxelization)│       │    processor     │
          └─────────────────┘              └─────────────────┘
          ┌─────────────────┐              ┌─────────────────┐
   13005 ─│ Inverse quantization│          │  Color inverse   │─ 13010
          │    processor     │             │transform processor│
          └─────────────────┘              └─────────────────┘
              Sharing reconstructed
                position values
                                          ┌─────────────────┐
                                          │     Renderer     │─ 13011
                                          └─────────────────┘
```

FIG.14

FIG.15

FIG.16

Reference frame

1600

current frame

1601

FIG.17

Search window of reference frame          Prediction unit of current frame

FIG.18

search window

Predicted point cloud

FIG.19

FIG.20

FIG.21

Search window of reference frame     Prediction unit of current frame

slice 0      slice n

| SPS | GPS | $APS_0$ | $APS_1$ | TPS | $Geom_0^0$ | $Attr_0^0$ | $Attr_1^0$ | $\cdots$ | $Geom_0^n$ | $Attr_0^n$ | $Attr_1^n$ |

| Geom_slice_header | Geom_slice_data |

Tile(0).tile_bounding_box_xyz0;
Tile(0).tile_bounding_box_whd;
......
Tile(n).tile_bounding_box_xyz0;
Tile(n).tile_bounding_box_whd;

geom_geom_parameter_set_id;
geom_tile_id;
geom_slice_id;
geomBoxOrigin;
geom_box_log2_scale;
geom_max_node_size_log2;
geom_num_points;

FIG. 22

FIG. 23

| seq_parameter_set_rbsp( ) { | Descriptor |
|---|---|
| … | |
| MVDCM_enable | u(1) |
|   if(MVDCM_enable) | |
|    MVDCM_points | ue(v) |
| … | |
| } | |

| geometry_parameter_set( ) { | Descriptor |
|---|---|
| … | |
| gps_MVDCM_enable | u(1) |
|   if(gps_MVDCM_cnablc) | |
|   gps_MVDCM_points | ue(v) |
|   gps_MVDCM_prediction_mode | ue(v) |
|    } | |
| … | |
| } | |

| geometry_slice_header( ) { | Descriptor |
|---|---|
| … | |
| gsh_MVDCM_enable | u(1) |
|   if(gsh_MVDCM_enable) { | |
|    gsh_MVDCM_points | ue(v) |
|    gsh_MVDCM_prediction_mode | ue(v) |
| | |
|    } | |
| … | |
| } | |

FIG. 24

| Struct PUtree( ) { | Descriptor |
|---|---|
| … | |
| popul_flags | u(1) |
| split_flags | u(1) |
| MVs | se(v) |
| isWorld | u(1) |
| MVDCM_flags | u(1) |
| … | |
| } | |

FIG.25

| Mode | description |
|---|---|
| 0 | No compensation |
| 1 | Origin_closed |
| 10 | Closest vertex |
| 11 | Center_point_vector |
| 0100~1111 | reserved |

FIG.26

Bit stream

↓

| Entropy decoding | ~2700 |

↓

| Dequantization | ~2701 |

↓

| Inverse transform coordinates | ~2702 |

↓

| Global motion compensation | ~2703 |

↓

| Prediction Unit/Search Window determination | ~2704 |

↓

MVDCM_e
nable?

Y          N

PU_tree.M          N          PU_tree.spl
VDCM_flag?                    it_flag?

Y          N

| 2705~ | Motion Vector
Estimation For MVDCM | | Decode PU_tree.MVs | ~2707 |

↓

| 2706~ | Motion compensation |

↓

compensated Point
Cloud < node_range?

↓Y

| Update PointCloud |

↓y

reconstruct
Point Cloud geometry

↓

| Inverse transform
Colors |

↓

FIG.27

Bit stream

| Entropy decoding | ~2700 |

| Dequantization | ~2701 |

| Inverse transform coordinates | ~2702 |

| Global motion compensation | ~2703 |

| Prediction Unit/Search Window determination | ~2704 |

MVDCM_e nable?

Y          N

PU_tree.M VDCM_flag?     N     PU_tree.spl it_flag?

Y                              N

2705~ | Motion Vector Estimation For MVDCM |     | Decode PU_tree.MVs | ~2707

2706~ | Motion compensation |

compensated Point Cloud < node_range?

Y

| Update PointCloud |

y

reconstruct
Point Cloud geometry

| Inverse transform Colors |

FIG.28

Encoding point cloud data — S2800

Transmitting bitstream including point cloud data — S2801

FIG.29

Receiving bitstream including point cloud data — S2900

Decoding point cloud data — S2901

<div align="center">

**INTERNATIONAL SEARCH REPORT**

</div>

| International application No. |
|---|
| **PCT/KR2022/003773** |

| **A.** | **CLASSIFICATION OF SUBJECT MATTER** |
|---|---|

**H04N 19/597**(2014.01)i; **H04N 19/57**(2014.01)i; **H04N 19/70**(2014.01)i; **H04N 19/105**(2014.01)i; **G06T 9/00**(2006.01)i

According to International Patent Classification (IPC) or to both national classification and IPC

| **B.** | **FIELDS SEARCHED** |
|---|---|

Minimum documentation searched (classification system followed by classification symbols)

H04N 19/597(2014.01); G06T 3/00(2006.01); G06T 9/00(2006.01); G06T 9/40(2006.01); H04N 19/172(2014.01); H04N 5/225(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 프레임(frame), 서치(search), 윈도우(window), 프레딕션(prediction), 모션 벡터(motion vector)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | US 2020-0258262 A1 (INTERDIGITAL VC HOLDINGS, INC.) 13 August 2020 (2020-08-13) See paragraphs [0029], [0037]-[0039] and [0064]-[0067]; claims 23 and 25; and figure 3. | 1-3,5,7-11,13,15 |
| A | | 4,6,12,14 |
| A | WO 2020-190093 A1 (LG ELECTRONICS INC.) 24 September 2020 (2020-09-24) See paragraphs [0009]-[0028]; and claims 1-6. | 1-15 |
| A | US 2019-0215532 A1 (VID SCALE, INC.) 11 July 2019 (2019-07-11) See paragraphs [0003]-[0019]; and claims 53-60. | 1-15 |
| A | WO 2020-146341 A1 (FUTUREWEI TECHNOLOGIES, INC.) 16 July 2020 (2020-07-16) See paragraphs [0004]-[0033]; and claims 1-10. | 1-15 |
| A | KR 10-2021-0030440 A (HUAWEI TECHNOLOGIES CO., LTD.) 17 March 2021 (2021-03-17) See paragraphs [0004]-[0113]; and claims 1-10. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 June 2022** | **22 June 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/003773**

| Patent document cited in search report | | | Publication date (day/month/year) | Patent family member(s) | | | Publication date (day/month/year) |
|---|---|---|---|---|---|---|---|
| US | 2020-0258262 | A1 | 13 August 2020 | CN | 111386551 | A | 07 July 2020 |
| | | | | EP | 3474231 | A1 | 24 April 2019 |
| | | | | EP | 3474232 | A1 | 24 April 2019 |
| | | | | EP | 3698328 | A1 | 26 August 2020 |
| | | | | WO | 2019-079093 | A1 | 25 April 2019 |
| WO | 2020-190093 | A1 | 24 September 2020 | CN | 113615204 | A | 05 November 2021 |
| | | | | EP | 3944625 | A1 | 26 January 2022 |
| | | | | KR | 10-2021-0134049 | A | 08 November 2021 |
| US | 2019-0215532 | A1 | 11 July 2019 | CN | 109417632 | A | 01 March 2019 |
| | | | | EP | 3482563 | A1 | 15 May 2019 |
| | | | | JP | 2019-525563 | A | 05 September 2019 |
| | | | | JP | 2022-000954 | A | 04 January 2022 |
| | | | | JP | 6983862 | B2 | 17 December 2021 |
| | | | | KR | 10-2019-0035678 | A | 03 April 2019 |
| | | | | KR | 10-2022-0047402 | A | 15 April 2022 |
| | | | | TW | 201812708 | A | 01 April 2018 |
| | | | | US | 10887621 | B2 | 05 January 2021 |
| | | | | US | 2021-0136413 | A1 | 06 May 2021 |
| | | | | WO | 2018-009746 | A1 | 11 January 2018 |
| WO | 2020-146341 | A1 | 16 July 2020 | | None | | |
| KR | 10-2021-0030440 | A | 17 March 2021 | BR | 112021000366 | A2 | 06 April 2021 |
| | | | | CN | 110719497 | A | 21 January 2020 |
| | | | | CN | 110719497 | B | 22 June 2021 |
| | | | | EP | 3813377 | A1 | 28 April 2021 |
| | | | | JP | 2021-524642 | A | 13 September 2021 |
| | | | | SG | 11202100255 | A | 25 February 2021 |
| | | | | US | 2021-0183110 | A1 | 17 June 2021 |
| | | | | WO | 2020-011265 | A1 | 16 January 2020 |

Form PCT/ISA/210 (patent family annex) (July 2019)